(19) Europäisches Patentamt
European Patent Office
Office européen des brevets

(11) **EP 4 472 344 A2**

(12) **EUROPEAN PATENT APPLICATION**

(43) Date of publication:
**04.12.2024 Bulletin 2024/49**

(21) Application number: **24174884.7**

(22) Date of filing: **08.05.2024**

(51) International Patent Classification (IPC):
**H04W 88/08** (2009.01)　　**H04W 28/02** (2009.01)

(52) Cooperative Patent Classification (CPC):
**H04W 88/085; H04W 28/02**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **09.05.2023 IN 202321032836**
**07.05.2024 US 202418656872**

(71) Applicant: **Mavenir Systems, Inc.**
**Richardson, TX 75081 (US)**

(72) Inventors:
• **Kompalli Chakravartula, Kalyana Rama Sesha Sayee**
**560036 Bangalore (IN)**
• **Taneja, Mukesh**
**560037 Bangalore (IN)**

(74) Representative: **dompatent von Kreisler Selting Werner -**
**Partnerschaft von Patent- und Rechtsanwälten mbB**
**Deichmannhaus am Dom**
**Bahnhofsvorplatz 1**
**50667 Köln (DE)**

(54) **SYSTEMS AND METHODS FOR DISTRIBUTED UNIT OR CENTRALIZED UNIT FLOW CONTROL OPTIMIZATIONS FOR HIGHLY SCALABLE CELLULAR SYSTEMS**

(57)　System and methods for Distributed Unit (DU) or Centralized Unit (CU) flow control optimizations for highly scalable cellular systems. A DU is configured to indicate to CU if a specific Data Radio Bearer (DRB) is not getting adequate latency or throughput. Frequency of Downlink Data Delivery Status (DDDS) is increased for some such DRBs and can be decreased for other DRBs if needed. A buffer management method module is configured to improve scalability of a Base Station. Implementations of these operations can be configured for and located at a Radio Access Network Intelligent Controller.

<u>100</u>

**FIG. 1**

EP 4 472 344 A2

**Description**

**DESCRIPTION OF RELATED TECHNOLOGY**

a. Field of the Disclosure

The present disclosure relates to systems and methods for radio access networks. The present disclosure relates to the design of operation, administration and management of various network elements of 4G and 5G based mobile networks.

b. Description of the Related Art

Conventional RANs were built employing an integrated unit where the entire RAN was processed. Conventional RANs implement the protocol stack (e.g., Physical Layer (PHY), Media Access Control (MAC), Radio Link Control (RLC), Packet Data Convergence Control (PDCP) layers) at the base station (also referred to as the evolved node B (eNodeB or eNB) for 4G LTE or next generation node B (gNodeB or gNB) for 5G NR. In addition, conventional RANs use application-specific hardware for processing, which make the conventional RANs difficult to upgrade and evolve.

Cloud-based Radio Access Networks (CRANs) are networks where a significant portion of the RAN layer processing is performed at a baseband unit (BBU) located in the cloud on commercial off-the-shelf servers, while the radio frequency (RF) and real-time critical functions can be processed in the remote radio unit (RRU), also referred to as the radio unit (RU). The BBU can be split into two parts: centralized unit (CU) and distributed unit (DU). CUs are usually located in the cloud on commercial off-the-shelf servers, while DUs can be distributed. The BBU can also be virtualized, in which case it is also known as vBBU. Radio Frequency (RF) interface and real-time critical functions can be processed in the remote radio unit (RRU).

For the RRU and DU to communicate, an interface called the fronthaul is provided. 3rd Generation Partnership Project (3GPP) has defined 8 options for the split between the BBU and the RRU among different layers of the protocol stack. There are multiple factors affecting the selection of the fronthaul split option such as bandwidth, latency, implementation cost, virtualization benefits, complexity of the fronthaul interface, expansion flexibility, computing power, and memory requirement. One of the splits recently standardized by O-RAN Alliance is split option 7-2x (Intra-Physical (PHY) layer split). In the uplink (UL), Fast Fourier Transform (FFT), Cyclic Prefix (CP) removal, and possibly pre-filtering functions reside in the RU, while the rest of PHY functions reside in the DU. In the downlink (DL), inverse Fast Fourier Transform (iFFT), CP addition, and beamforming functions reside in the RU, the rest of PHY functions reside in the DU. This split has multiple advantages such as simplicity, transport bandwidth scalability, beamforming support, interoperability, support for advanced receivers and inter-cell coordination, lower O-RU complexity, future proof-ness, interface and functions symmetry.

**SUMMARY**

Described are implementations of a computer system, computer system components, a method, and computer program products configured to execute program instructions for the method for radio access network, and operation, administration and management of various network elements of 4G, 5G, and further generations of the radio access network system. The method is performed by a computer system that comprises one or more processors and a computer-readable storage medium encoded with instructions executable by at least one of the processors and operatively coupled to at least one of the processors.

A method for a radio access network (RAN) base station (BS) comprises: selecting a subset of Data Radio Bearers (DRBs) from a set of DRBs; changing a frequency of DL Data Delivery Status (DDDS) message transmissions for the subset of DRBs; and maintaining a frequency or reducing the frequency of DDDS transmissions for remaining DRBs of the set of DRBs. The changing can comprise reducing the frequency of the DDDS message transmissions for the subset of DRBs; and maintaining a frequency of the DDDS transmissions for remaining DRBs of the set of DRBs. The changing can also comprise increasing the frequency of the DDDS message transmissions for the subset of DRBs; and maintaining a frequency or reducing the frequency of the DDDS transmissions for remaining DRBs of the set of DRBs.

In an implementation, the method is implemented at a RAN Intelligent Controller (RIC) configured to identify the subset of DRBs based on parameters sent from a Distributed Unit (DU) or a Centralized Unit (CU) of the BS. The method can further comprise: subscribing to the parameters from a gNB or eNB E2 node by a near-RT RIC; detecting, by the E2 node, an RIC event trigger; analyzing the parameters, by the near-RT RIC, to determine whether to change a frequency of the subset of DDDS transmissions, and if so; updating the parameters at the E2 node. The parameters can comprise:

a number of DRBs, total memory available for these DRBs; and
for each of the DRBs or for the subset DRBs, the parameters comprise:

a sample of PDU lengths received for that DRB at DU during a time interval,
time instants when DDDS is sent from DU to CU-UP for that DRB,
information from DDDS for that DRB,
an average RLC queueing delay in DU for that DRB,
an average queuing delay in CU-UP for that DRB,
a Mid-haul delay,
a memory wastage or utilization for that DRB at DU, or
a memory wastage or utilization for that DRB at CU, or
any combination of thereof.

The parameters can also comprise: sending output parameters from the RT RIC to the CU, the DU, or both, including: an identity of DRBs for which DDDS needs to be sent more often and a decreased time interval an identity of DRBs for which DDDS needs to be sent less often and an increased time interval; or updated buffer management pools for the subset of DRBs; or a combination of thereof.

In an implementation, there is a method for a radio access network (RAN) base station (BS) comprising a Distributed Unit (DU) and a Centralized unit (CU):

indicating at DU if a DRB is not getting a required latency or throughput;
determining, at the DU, if a waiting time of Radio Link Control (RLC) Service Data Units (SDUs) in queues at the DU exceeds a threshold criterion for a number of packets; and
if so, indicating by the DU to the CU that the threshold criterion is exceeded.

The method can further comprise: maintaining, by the DU, a latency condition state variable configured to indicate a high or low latency state. The DU can be configured to set a DDDS Protocol Data Unit (PDU) bit to indicate the latency condition when the latency is in the high condition. The method can further comprise: reducing a frequency of DDDS message transmissions for the DRB if the threshold criterion is exceeded.

In an implementation, there is a method for a radio access network (RAN) base station (BS) comprising a Distributed Unit (DU) and a Centralized unit (CU) comprises: configuring a 4G eNB DU to increase a frequency of DDDS messages to a CU upon finding holes in a received Packet Data Convergence Protocol (PDCP) SNs.

In an implementation, there is a system comprises: a base station (BS) comprising a buffer management module, the buffer management module being configured to take a vector of inputs and output buffer management parameters to compute a wastage for a buffer size for each DRB and an average memory wastage across a plurality of DRBs. The buffer management module can further be configured to at least give the output as ($b1, b2, ..., bK, M1, M2, ....., MK$); and the vector of inputs includes:

a sample of PDU lengths for each DRB,
total memory being made available for storing the PDUs of each DRB,
5QI of each DRB, or
total number of DRBs to be supported; or
or any combination thereof.

For a PDU of length L is assigned to a buffer of size b, a memory wastage can be defined as ($b - L$) bytes, or memory utilization is defined as $L/b$; and the buffer management module is configured to at least estimate the average memory wastage considering all of the plurality of DRBs. The buffer management module can be configured to at least estimate the average memory wastage for each buffer size separately. The buffer management module can be configured to at least:

partition a total memory of M bytes is partitioned into K pools, where the $i$th memory pool consists of $M_i$ buffers each of size $b_i$ bytes;
take a sample of T PDU lengths $X_1, X_2, ..., X_T$ at DU for a DRB, where each of the T PDUs are to be assigned to a buffer having a size one of the K different values; wherein K is smaller than T for one or more applications; and
calculate empirical probabilities $p_i$ for each of the K buffer sizes, where $1 <= i <= K$, so that where a plurality of the PDUs get assigned to a buffer of the same size.

where $Y_i$ denotes an $i$th maximum of the sample $X_1, X_2, ..., X_T$, so that $Y_1$ is the PDU length that occurred the maximum

number of times, $Y_2$ is the next PDU length after $Yi$ that occurred the maximum number of times, and so on to Yn, and $Y_{(1)}, Y_{(2)}, ..., Y_{(K)}$ is the increasing-ordered sequence of $Y_1, Y_2, ..., Y_K$, the size of each buffer of type $i$ is estimated as $b_i = Y_{(i)} + \mu_i$, $\mu$ being configurable a small factor in bytes, and a number of the buffers to be $M_i$ are estimated and set it equal to Ceil($p_i*M/b_i$).

The buffer management module can be configured with a RLC SDU queue of size (RlcSduQSize) for each DRB, and calculating the maximum number of buffers for each buffer size the *RlcSduQSize* comprises:

first calculating empirical probabilities $p_i$ for each of the K PDU lengths, where

$$1 <= i <= K.;$$

calculating the probability $q_i$ ;
summing the PDU of length $h$ to be assigned a buffer of size $b_i p_h$, taking PDU of length h from the set of PDUs with PDU length K; and

assigning Ceil($q_i * RlcSduQSize$) buffers of size $b_i$ should for the DRB.
The buffer management modules can be configured with a maximum number of buffers for a DRB.
The buffer management module can be configured with a *RLC SDU* queue of size (RlcSduQSize) for each DRB, and calculating the maximum number of buffers for each buffer size the *RlcSduQSize* comprises:

first calculating empirical probabilities $p_i$ for each of the K PDU lengths, where

$$1 <= i <= K.;$$

calculating the probability $q_i$ ;
summing the PDU of length $h$ to be assigned a buffer of size $b_i p_h$, taking PDU of length h from the set of PDUs with PDU length K; and
assigning Ceil($q_i * RlcSduQSize)$ buffers of size $b_i$ should for the DRB.

In an implementation, the buffer management module can be implemented a Distributed Unit (DU) or a Centralized unit (CU).
In an implementation, the buffer management module can be connected to an RIC, and the RIC can be configured to implement actions for the buffer management module.

## BRIEF DESCRIPTION OF THE DRAWINGS

Non-limiting and non-exhaustive embodiments are described with reference to the following drawings. In the drawings, like reference numerals refer to like parts throughout the various figures unless otherwise specified. For a better understanding, reference can be configured to be made to the following Detailed Description, which is to be read in association with the accompanying drawings.
Various embodiments and implementations now will be described more fully hereinafter with reference to the accompanying drawings, which form a part hereof, and which show, by way of illustration, specific embodiments by which the innovations described herein can be practiced. The embodiments can, however, be embodied in many different forms and should not be construed as limited to the embodiments and implementations set forth herein; rather, these embodiments and implementations are provided so that this disclosure will be thorough and complete, and will fully convey the scope of the embodiments and implementations to those skilled in the art. Among other things, the various embodiments and implementations can be methods, systems, media, or devices. The following detailed description is, therefore, not to be taken in a limiting sense.
Throughout the specification and claims, the following terms take the meanings explicitly associated herein, unless the context clearly dictates otherwise. The term "herein" refers to the specification, claims, and drawings associated with the current application.
In addition, as used herein, the term "or" is an inclusive "or" operator, and is equivalent to the term "and/or" unless the context clearly dictates otherwise. The term "based on" is not exclusive and allows for being based on additional factors not described, unless the context clearly dictates otherwise. In addition, throughout the specification, the meaning of "a" "an" and "the" include plural references. The meaning of "in" includes "in" and "on."

FIG. 1 is a block diagram of a system architecture.

FIG. 2 shows an example of a User Plane Stack.

FIG. 3 shows an example of a Control Plane Stack.

FIG. 4A shows an example of a Separation of CU-CP (CU-Control Plane) and CU-UP (CU-User Plane).

FIG. 4B shows an example of a Separation of CU-CP (CU-Control Plane) and CU-UP (CU-User Plane).

FIG. 5 shows a DL (Downlink) Layer 2 Structure.

FIG. 6 shows an exemplary logical flow for implementing a UL Layer 2 structure.

FIG. 7 shows an L2 Data Flow example.

FIG. 8A shows an example of an O-RAN architecture.

FIG. 8B shows an example of an O-RAN architecture.

FIG. 9A illustrates a PDU Session architecture consisting of multiple DRBs.

FIG. 9B illustrates a flow for PDU sessions, DRBs and GTP-U Tunnels across CU and DU.

FIG. 9C illustrates a CU and DU view on PDU session, DRBs and GTP-U tunnels for a 5G network architecture.

FIG. 10A describes an EN-DC architecture.

FIG. 10B describes a NG-RAN architecture.

FIG. 11 shows DL User data (DUD) PDU from CU-UP to RLC SDU queues at the DU.

FIG. 12 shows Data Delivery Status (DDDS) Flow Control Feedback from DU to CU-UP for each DRB.

FIG. 13 shows Radio Assistance Information from DU to CU-UP.

FIG. 14 shows DL Data Delivery Status (DDDS) from the corresponding node (DU) to the node hosting NR PDCP for each DRB.

FIG. 15 shows an initial round for a per-network function buffer management.

FIG. 16 shows a Semi-static / Dynamic optimizations to support CU-DU flow control for highly scalable systems.

FIG. 17 illustrates a flow for near-Real-time RIC subscribing to select parameters from DU/CU.

FIG. 18 illustrates a flow for near-RT-RIC subscribing to relevant parameters from the DU.

FIG. 19 illustrates a flow for near-RT-RIC subscribing to various parameters from the CU.

FIG. 20 shows a flow for near-RT-RIC to help manage frequency of flow control feedback and buffer management at DU/CU.

## DETAILED DESCRIPTION

Reference is made to Third Generation Partnership Project (3GPP) and the Internet Engineering Task Force (IETF) in accordance with embodiments of the present disclosure. The present disclosure employs abbreviations, terms and technology defined in accord with Third Generation Partnership Project (3GPP) and/or Internet Engineering Task Force (IETF) technology standards and papers, including the following standards and definitions. 3GPP and IETF technical specifications (TS), standards (including proposed standards), technical reports (TR) and other papers are incorporated by reference in their entirety hereby, define the related terms and architecture reference models that follow.

*Abbreviations*

 3GPP: Third generation partnership project
 5GC: 5G Core Network
 5G NR: 5G New Radio
 5QI: 5G QoS Identifier
 ACK: Acknowledgement
 ACLR: Gain and Adjacent Channel Leakage Ratio
 ADC: Analog-to-Digital Converter
 AM: Acknowledged Mode
 APN: Access Point Name
 ARP: Allocation and Retention Priority
 ASIC: Application Specific Integrated Circuit
 AWGN: Additive White Gaussian Noise
 BFW: Beamforming weight
 BS: Base Station
 CNF: Cloud-Native Network Function
 CP: Control Plane
 C-RAN: cloud radio access network
 CU: Centralized Unit
 CU-CP: Centralized Unit - Control Plane
 CU-UP: Centralized Unit - User Plane
 CQI: Channel Quality Indicator
 DAC: Digital-to-Analog Converter
 DC: Dual Connectivity
 DCI: Downlink Control Information
 DDDS: DL Data Delivery Status
 DFE: Digital Front End
 DL: Downlink
 DMRS: Demodulation Reference Signal
 DNN: Data Network Name
 DRB: Data Radio Bearer
 DU: Distributed unit
 eNB: evolved Node B
 eMBB: Enhanced Mobile Broadband
 EPC: Evolved Packet Core
 EN-DC
 EP: Endpoint Pod
 E-UTRA: Evolved Universal Terrestrial Radio Access
 IoT: Internet of Things
 IP: Internet Protocol
 IWF: Interworking Function
 GBR: Guaranteed Bit Rate
 gNB: gNodeB (5G base station)
 GTP-U: General Packet Radio Service (GPRS) Tunnelling Protocol - User Plane
 GW: Gateway
 HA: High Availability
 L1: Layer 1
 L2: Layer 2
 L3: Layer 3
 LC: Logical Channel
 MAC: Medium Access Control
 MIMO: Multiple-in Multiple-out

MME: Mobility Management Entity
MR-DC: Multi-Radio Dual Connectivity
M-plane: Management plane interface between SMO and O-RU
NACK: Negative Acknowledgement
NAS: Non-Access Stratum
NB: Narrowband
Near-RT RIC: Near-Real-Time RIC
NMS: Network Management System
NR: New Radio
NR-U: New Radio - User Plane
NSA: Non-Standalone Architecture
OFDM: Orthogonal Frequency-division Multiplexing
O-RAN: Open Radio Access Network
PA: Power Amplifier
PDB: Packet Delay Budget
PDCP : Packet Data Convergence Protocol
PDU: Protocol Data Unit
PDCCH: Physical Downlink Control Channel
PDSCH: Physical Downlink Shared Channel
PHY: Physical Layer
PRG: Physical Resource block Group
PUCCH: Physical Uplink Control Channel
PUSCH: Physical Uplink Shared Channel
QCI: QoS Class Identifier
QFI: QoS Flow Id
QFI: QoS Flow Identifier
QoS : Quality of Service
RAT: Radio Access Technology
RB: Resource Block
RDI: Reflective QoS Flow to DRB Indication
RIC: RAN Intelligent Controller
RLC: Radio Link Control
RLC-AM: RLC Acknowledged Mode
RLC-UM: RLC Unacknowledged Mode
RMM: Radio resource management
RQI: Reflective QoS Indication
RRC: Radio Resource Control
RU: Radio Unit
SA: Standalone Architecture
SCTP: Stream Control Transmission Protocol
SDAP: Service Data Adaptation Protocol
S-GW: Serving Gateway
SINR: Signal-to-Interference and Noise Ratio
SMO: Service Management and Orchestration system
SN: Signal Node
SR: Scheduling Request
SRS: Sounding Reference Signal
TCP: Transmission Control Protocol
TEID: Tunnel Endpoint Identifier
U-plane: User plane
UPF: User Plane Function
UE: User Equipment
UL: Uplink
UM: Unacknowledged Mode
URLLC: Ultra Reliance Low Latency Communication

*Documents*

O-RAN.WG4.MP.0-R003-v13.00

3GPP TS 23.203 V 17.2.0 2021-12-23

3GPP TS 23.501 V 18.1.0 2023-04-05

3GPP TS 38.300 V 17.4.0 03-28-2023

3GPP TS 36.321 V 17.4.0 2023-03-29

3GPP TS 36.323 V 17.2.0 2023-01-13

3GPP TS 38.321 V 17.4.0 2023-03-29

3GPP TS 38.401 V 17.4.0 2023-04-03

3GPP TS 38.501 V 18.1.0 2023-04-05

3GPP TS 38.425 17.3.0, 2023-04-03

Described are embodiments or implementations of technology for a cloud-based Radio Access Networks (RAN), where a significant portion of the RAN layer processing is performed at a central unit (CU) and a distributed unit (DU). Both CUs and DUs are also known as the baseband units (BBUs). CUs are usually located in the cloud on commercial off-the-shelf servers, while DUs can be distributed. The RF and real-time critical functions can be processed in the remote radio unit (RU).

*RAN Architectures*

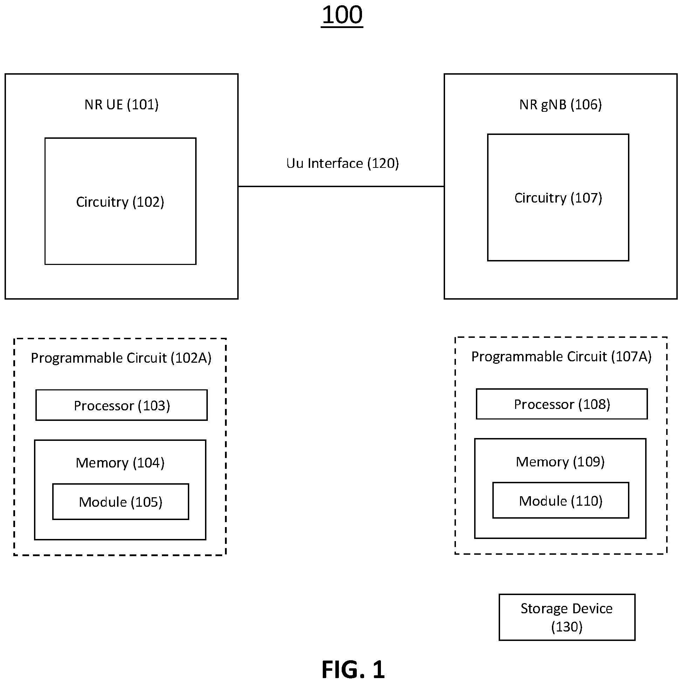

FIG. 1 is a block diagram of a system 100 for implementations as described herein. System 100 includes a NR UE 101, a NR gNB 106. The NR UE and NR gNB 106 are communicatively coupled via a Uu interface 120.

NR UE 101 includes electronic circuitry, namely circuitry 102, that performs operations on behalf of NR UE 101 to execute methods described herein. Circuity 102 can be implemented with any or all of (a) discrete electronic components, (b) firmware, and (c) a programmable circuit 102A.

NR gNB 106 includes electronic circuitry, namely circuitry 107, that performs operations on behalf of NR gNB 106 to execute methods described herein. Circuity 107 can be implemented with any or all of (a) discrete electronic components, (b) firmware, and (c) a programmable circuit 107A.

Programmable circuit 107A, which is an implementation of circuitry 107, includes a processor 108 and a memory 109. Processor 108 is an electronic device configured of logic circuitry that responds to and executes instructions. Memory 109 is a tangible, non-transitory, computer-readable storage device encoded with a computer program. In this regard, memory 109 stores data and instructions, i.e., program code, that are readable and executable by processor 108 for controlling operations of processor 108. Memory 109 can be implemented in a random-access memory (RAM), a hard drive, a read only memory (ROM), or a combination thereof. One of the components of memory 109 is a program module, namely module 110. Module 110 has instructions for controlling processor 108 to execute operations described herein on behalf of NR gNB 106.

The term "module" is used herein to denote a functional operation that can be embodied either as a stand-alone component or as an integrated configuration of a plurality of subordinate components. Thus, each of module 105 and 110 can be implemented as a single module or as a plurality of modules that operate in cooperation with one another.

While modules 110 are indicated as being already loaded into memories 109, and module 110 can be configured on a storage device 130 for subsequent loading into their memories 109. Storage device 130 is a tangible, non-transitory, computer-readable storage device that stores module 110 thereon. Examples of storage device 130 include (a) a compact disk, (b) a magnetic tape, (c) a read only memory, (d) an optical storage medium, (e) a hard drive, (f) a memory unit consisting of multiple parallel hard drives, (g) a universal serial bus (USB) flash drive, (h) a random-access memory, and (i) an electronic storage device coupled to NR gNB 106 via a data communications network.

Uu Interface (120) is the radio link between the NR UE and NR gNB, which is compliant to the 5G NR specification.

UEs 101 can be dispersed throughout a wireless communication network, and each UE can be stationary or mobile. A UE includes: an access terminal, a terminal, a mobile station, a subscriber unit, a station, and the like. A UE can also include be a cellular phone (e.g., a smart phone), a personal digital assistant (PDA), a wireless modem, a wireless communication device, a handheld device, a laptop computer, a cordless phone, a wireless local loop (WLL) station, a tablet, a camera, a gaming device, a drone, a robot/robotic device, a netbook, a smartbook, an ultrabook, a medical device, medical equipment, a healthcare device, a biometric sensor/device, a wearable device such as a smart watch, smart clothing, smart glasses, a smart wristband, and/or smart jewelry (e.g., a smart ring, a smart bracelet, and the like), an entertainment device (e.g., a music device, a video device, a satellite radio, and the like), industrial manufacturing equipment, a global positioning system (GPS) device, or any other suitable device configured to communicate via a wireless or wired medium. UEs can include UEs considered as machine-type communication (MTC) UEs or enhanced/evolved MTC (eMTC) UEs. MTC/eMTC UEs that can be implemented as IoT UEs. IoT UEs include, for example, robots/robotic devices, drones, remote devices, sensors, meters, monitors, cameras, location tags, and the like, that can communicate with a BS, another device (e.g., remote device), or some other entity. A wireless node can provide, for example, connectivity for or to a network (e.g., a wide area network such as Internet or a cellular network) via a wired or wireless communication link.

One or more UEs 101 in the wireless communication network can be a narrowband bandwidth UE. As used herein, devices with limited communication resources, e.g. smaller bandwidth, are considered as narrowband UEs. Similarly, legacy devices, such as legacy and/or advanced UEs can be considered as wideband UEs. Wideband UEs are generally understood as devices that use greater amounts of bandwidth than narrowband UEs.

The UEs 101 are configured to connect or communicatively couple with a RAN. In embodiments, the RAN can be an NG RAN or a 5G RAN, an E-UTRAN, an MF RAN, or a legacy RAN, such as a UTRAN or GERAN. The term "NG RAN" or the like refers to a RAN 110 that operates in an NR or 5G system, the term "E-UTRAN" or the like refers to a RAN that operates in an LTE or 4G system, and the term "MF RAN" or the like refers to a RAN that operates in an MF system 100. The UEs 101 utilize connections (or channels), respectively, each of which comprises a physical communications interface or layer. The connections and can comprise several different physical DL channels and several different physical UL channels. As examples, the physical DL channels include the PDSCH, PMCH, PDCCH, EPDCCH, MPDCCH, R-PDCCH, SPDCCH, PBCH, PCFICH, PHICH, NPBCH, NPDCCH, NPDSCH, and/or any other physical DL channels mentioned herein. As examples, the physical UL channels include the PRACH, PUSCH, PUCCH, SPUCCH, NPRACH, NPUSCH, and/or any other physical UL channels mentioned herein.

The RAN can include one or more AN nodes or RAN nodes. These access nodes can be referred to as BS, gNBs, RAN nodes, eNBs, NodeBs, RSUs, MF-APs, TRxPs or TRPs, and so forth, and comprise ground stations (e.g., terrestrial access points) or satellite stations providing coverage within a geographic area (e.g., a cell). The term "NG RAN node" or the like refers to a RAN node that operates in an NR or 5G system (e.g., a gNB), and the term "E-UTRAN node" or the like refers to a RAN node that operates in an LTE or 4G system (e.g., an eNB). According to various embodiments, the RAN nodes can be implemented as one or more of a dedicated physical device such as a macrocell base station, and/or a low power base station for providing femtocells, picocells or other like cells having smaller coverage areas, smaller user capacity, or higher bandwidth compared to macrocells.

In some embodiments, all or parts of the RAN nodes can be implemented as one or more software entities running on server computers as part of a virtual network, which can be referred to as a CRAN and/or a vBBU. In these embodiments, the CRAN or vBBU can implement a RAN function split, such as a PDCP split wherein RRC and PDCP layers are operated by the CRAN/vBBU and other L2 protocol entities are operated by individual RAN nodes; a MAC/PHY split where RRC, PDCP, RLC, and MAC layers are operated by the CRAN/vBBU and the PHY layer is operated by individual RAN nodes; or a "lower PHY" split where RRC, PDCP, RLC, MAC layers and upper portions of the PHY layer are operated by the CRAN/vBBU and lower portions of the PHY layer are operated by individual RAN nodes. This virtualized framework allows the freed-up processor cores of the RAN nodes to perform other virtualized applications. In some implementations, an individual RAN node can represent individual gNB-DUs that are connected to a gNB-CU 151via individual F1 interfaces. In these implementations, the gNB-DUs can include one or more remote radio heads (RRH), and the gNB-CU 151can be operated by a server that is located in the RAN or by a server pool in a similar manner as the CRAN/vBBU. One or more of the RAN nodes can be next generation eNBs (ng-eNBs), which are RAN nodes that provide E-UTRA user plane and control plane protocol terminations toward the UEs 101, and are connected to a 5GC via an NG interface. In MF implementations, the MF-APs are entities that provide MultiFire radio services, and can be similar to eNBs in an 3GPP architecture.

In some implementations, access to a wireless interface can be scheduled, wherein a scheduling entity (e.g.: BS, gNB, eNB and the like) allocates bandwidth resources for devices and equipment in its service area or cell. As scheduling entity can be configured to schedule, assign, reconfigure, and release resources for one or more subordinate entities. In some examples, a UE 101 (or other device) can function as master node scheduling entity, scheduling resources for one or more secondary node subordinate entities (e.g., one or more other UEs 101). Thus, in a wireless communication network with a scheduled access to time-frequency resources and having a cellular configuration, a P2P configuration, and a mesh configuration, a scheduling entity and one or more subordinate entities can communicate utilizing the scheduled resources.

BS can be equipped with T antennas and UE 101 can be equipped with R antennas, where in general $T \geq 1$ and $R \geq 1$. At BS, a transmit processor is configured to receive data from a data source for one or more UEs 101 and select one or more modulation and coding schemes (MCS) for each UE based on channel quality indicators (CQIs) received from the UE 101. The BS is configured to process (e.g., encode and modulate) the data for each UE 101 based on the MCS(s) selected for the UE 101, and provide data symbols for all UEs. A transmit processor is also configured to process system information (e.g., for static resource partitioning information (SRPI) and the like) and control information (e.g., CQI requests, grants, upper layer signaling, and the like) and can provide overhead symbols and control symbols. Processor 108 can also generate reference symbols for reference signals (e.g., the cell-specific reference signal (CRS)) and synchronization signals (e.g., the primary synchronization signal (PSS) and the secondary synchronization signal (SSS)). A transmit (TX) multiple-input multiple-output (MIMO) processor can be configured perform spatial processing (e.g., precoding) on the data symbols, the control symbols, the overhead symbols, and/or the reference symbols, if applicable, and can be configured to provide T output symbol streams to T modulators (MODs). Each modulator can be configured to process a respective output symbol stream (e.g., for OFDM, etc.) to obtain an output sample stream. Each modulator can further be configured to process (e.g., convert to analog, amplify, filter, and upconvert) the output sample stream to obtain a downlink signal. T downlink signals from modulators can be transmitted via T antennas.

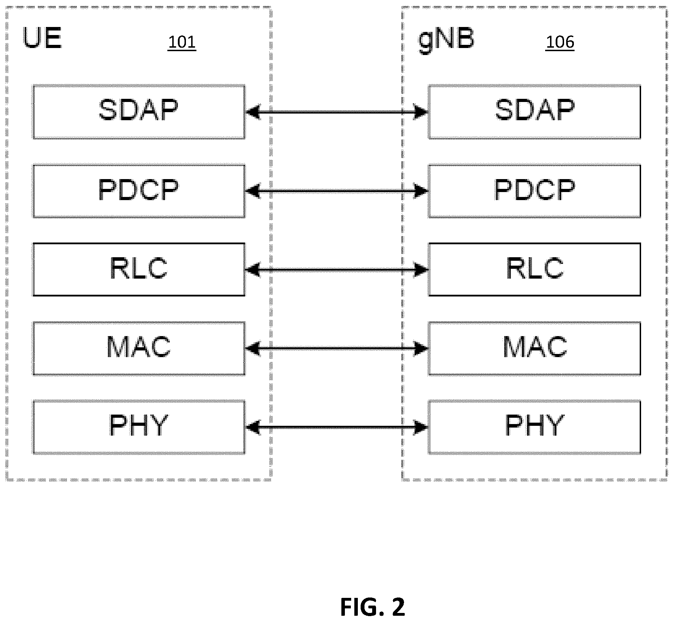

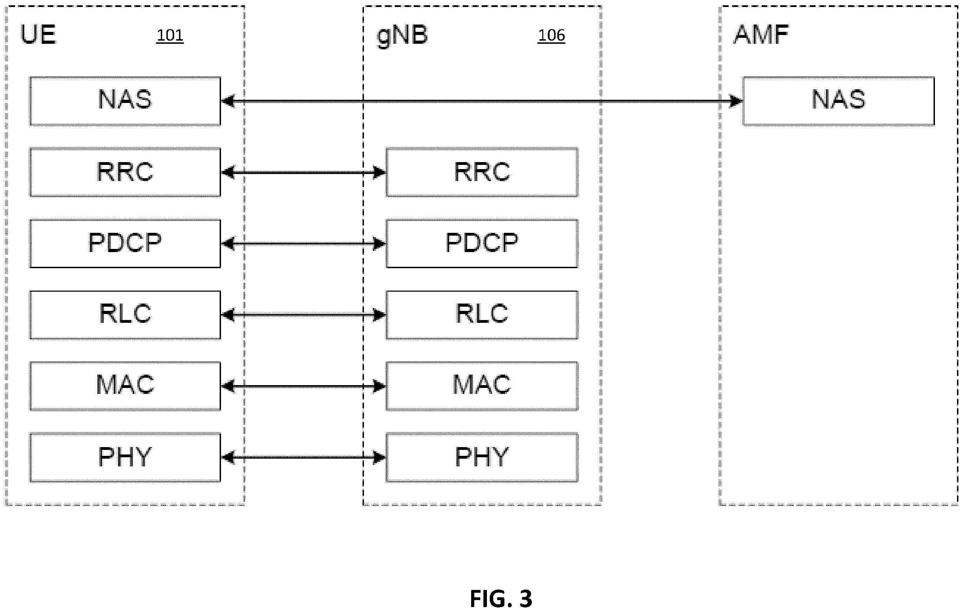

An overview of 5G NR Stacks is as follows. 5G NR (New Radio) user and control plane functions with monolithic gNB 106 are shown in the FIG.1 and FIG. 2 . For the user plane, PHY (physical), MAC (Medium Access Control), RLC (Radio Link Control), PDCP (Packet Data Convergence Protocol) and SDAP (Service Data Adaptation Protocol) sublayers are terminated in the gNB 106 on the network side. For the control plane, RRC (Radio Resource Control), PDCP, RLC, MAC and PHY sublayers are terminated in the gNB 106 on the network side and NAS (Non-Access Stratum) is terminated in the AMF (Access Mobility Function) on the network side. FIG. 2 shows an example of a User Plane Stack as descried in 3GPP TS 38.300. FIG. 3 shows an example of a Control Plane Stack as described in 3GPP TS 38.300.

An NG-RAN (NG-Radio Access Network) architecture from 3GPP TS 38.401 is described below. F1 is the interface between gNB-CU 151 (gNB - Centralized Unit) and gNB-DU 152 (gNB - Distributed Unit), NG is the interface between gNB-CU 151 (or gNB) and 5GC (5G Core), E1 is the interface between CU-CP (CU-Control Plane) and CU-UP (CU-User Plane), and Xn is interface between gNBs.

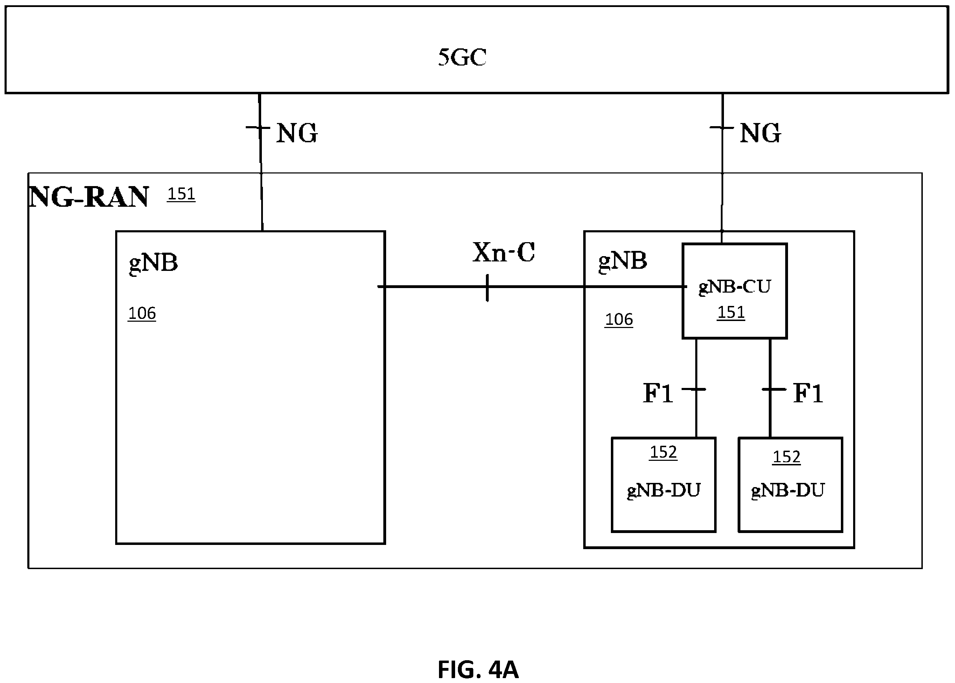

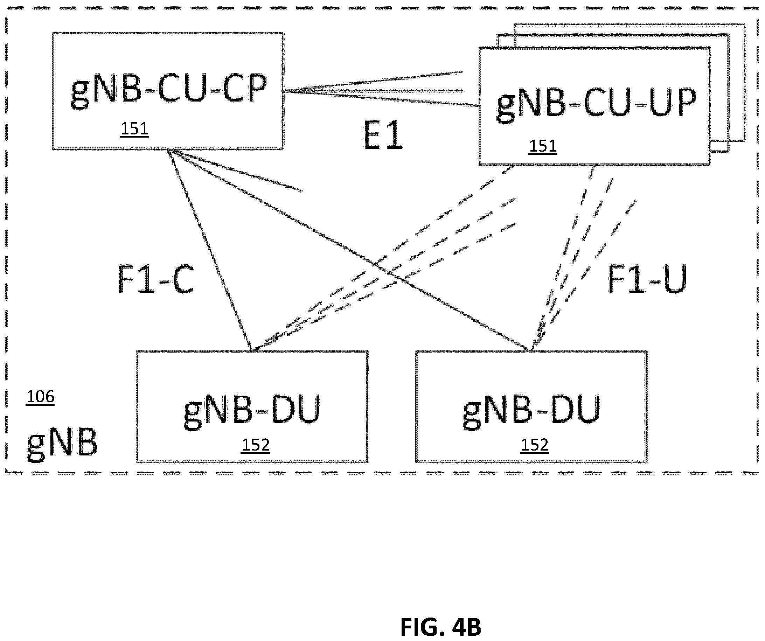

A gNB 106 can consist of a gNB-CU-CP, multiple gNB-CU-UPs and multiple gNB-DUs. The gNB-CU-CP is connected to the gNB-DU 152 through the F1-C interface and to the gNB-CU-UP through the E1 interface. The gNB-CU-UP is connected to the gNB-DU 152 through the F1-U interface and to the gNB-CU-CP through the E1 interface. One gNB-DU 152 is connected to only one gNB-CU-CP and one gNB-CU-UP is connected to only one gNB-CU-CP. FIG. 4A shows an example of an NG-RAN Architecture as described in 3GPP TS 38.501. FIG. 4B shows an example of a Separation of CU-CP (CU-Control Plane) and CU-UP (CU-User Plane) as described in 3GPP TS 38.401.

A Layer 2 (L2) of 5G NR is split into the following sublayers is described in 3GPP TS 38.300):

◦ Medium Access Control (MAC): The MAC sublayer offers Logical Channels (LCs) to the RLC sublayer. This layer runs a MAC scheduler to schedule radio resources across different LCs (and their associated radio bearers).

◦ Radio Link Control (RLC): The RLC sublayer offers RLC channels to the PDCP sublayer. The RLC sublayer supports three transmission modes: RLC-Transparent Mode (RLC-TM), RLC-Unacknowledged Mode (RLC-UM) and RLC-Acknowledgement Mode (RLC-AM). RLC configuration is per logical channel. It hosts ARQ (Automatic Repeat Request) protocol for RLC-AM mode.

◦ Packet Data Convergence Protocol (PDCP): The PDCP sublayer offers Radio Bearers (RBs) to the SDAP sublayer. There are two types of Radio Bearers: Data Radio Bearers (DRBs) for data and Signaling Radio Bearers (SRBs) for control plane.

◦ Service Data Adaptation Protocol (SDAP): The SDAP offers QoS Flows to the 5GC (5G Core). This sublayer provides mapping between a QoS flow and a DRB. It marks QoS Flow Id in DL (downlink) as well as UL (uplink packets).

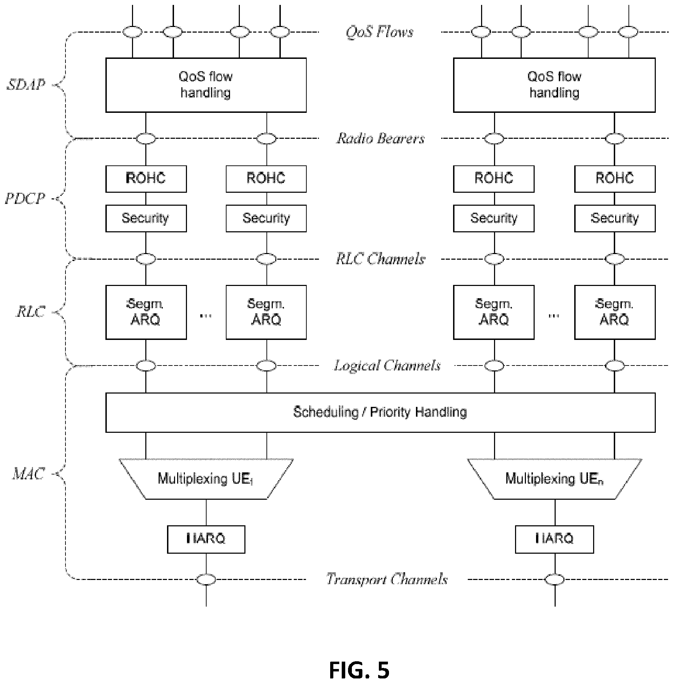

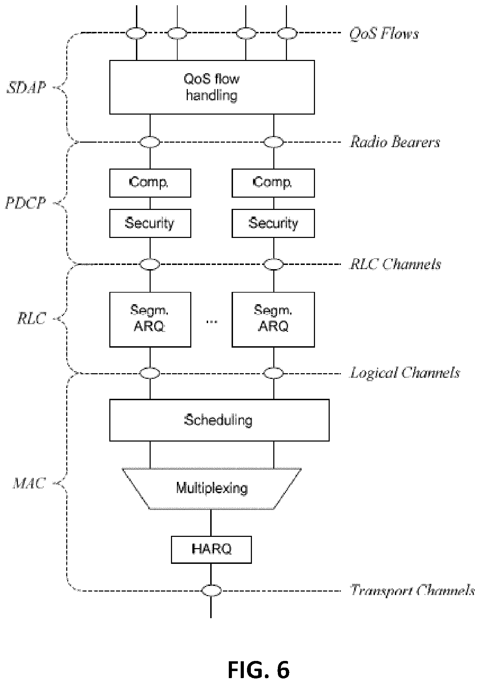

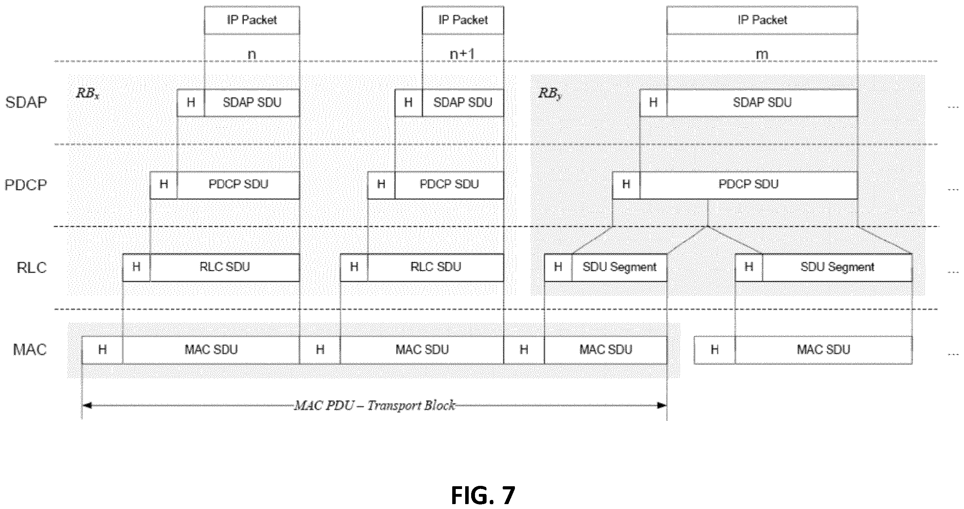

FIG. 5 shows a DL (Downlink) Layer 2 Structure as described in 3GPP TS 38.300. FIG. 6 shows an UL (uplink) Layer 2 Structure in accord with 3GPP TS38.300. FIG. 7 shows an L2 Data Flow example in accord with 3GPP TS 38.300 ([H] denotes headers or subheaders in FIG. 7.)

O-RAN, which is based on disaggregated components and connected through open and standardized interfaces, is based on 3GPP NG-RAN. An overview of O-RAN with disaggregated RAN (CU, DU, and RU), near-real-time RIC 160 and non-real-time RIC is shown in the FIG. below. Here, DU (Distributed Unit) and CU (Centralized Unit) are typically implemented using COTS (Commercial off-the-shelf) hardware.

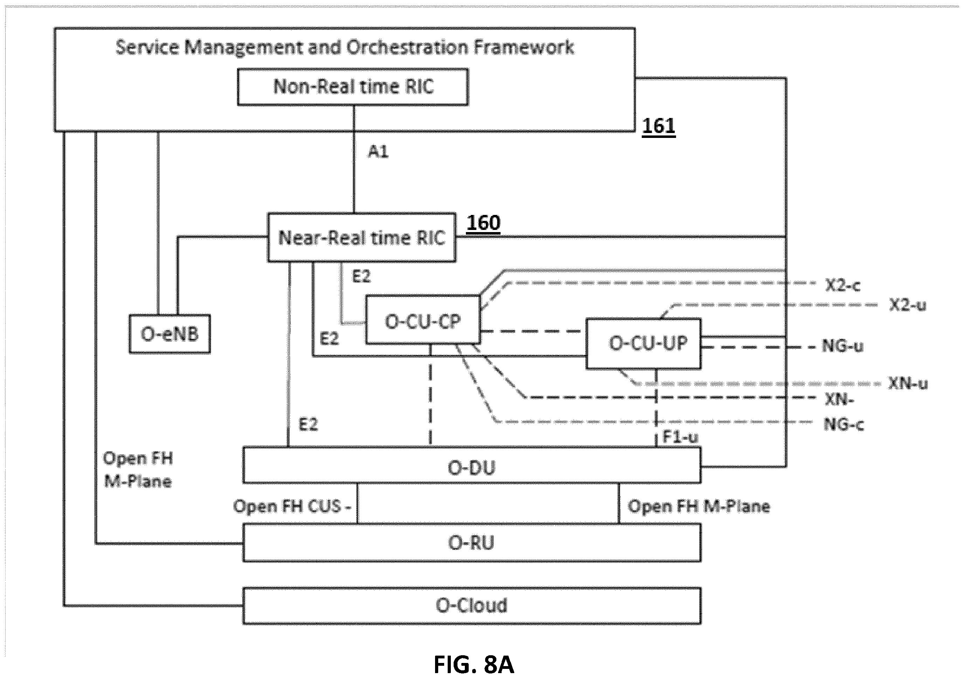

FIGS. 8A-8B show an example of an O-RAN architecture. In FIG. 8A, the CU and the DU are connected using the F1 interface (with F1-C for control plane and F1-U for user plane traffic) over the midhaul (MH) path. One DU could host multiple cells (for example, one DU could host 24 cells) and each cell can support many users. For example, one cell can support 600 RRC Connected users and out of these 600, there can be 200 Active users (i.e.; users which have data to send at a given point of time).

A cell site could include multiple sectors and each sector can support multiple cells. For example, one site could consist of three sectors and each sector could support 8 cells (with 8 cells in each sector on different frequency bands). One CU-CP could support multiple DUs and thus multiple cells. For example, a CU-CP could support 1000 cells and around 100,000 UEs. Each UE could support multiple DRBs and there could be multiple instances of CU-UP to serve these DRBs. For example, each UE could support 4 DRBs, and 400,000 DRBs (corresponding to 100,000 UEs) can be served by five CU-UP instances (and one CU-CP instance).

DU can be located in a private data center or it could be located at a cell-site too. CU can also be located in a private data center or even hosted on a public cloud system. DU and CU can be tens of kilometers away. CU can communicate with 5G core system which could also be hosted in the same public cloud system (or could be hosted by a different cloud provider). RU (Radio Unit) is located at cell-site and communicated with DU via a fronthaul (FH) interface.

The E2 nodes (CU and DU) are connected to the near-real-time RIC 160 using the E2 interface. The E2 interface is used to send data (e.g., user, cell, slice KPMs) from the RAN, and deploy control actions and policies to the RAN at near-real-time RIC 160. The application or service at the near-real-time RIC 160 that deploys the control actions and policies to the RAN are called xApps. The near-real-time RIC 160 is connected to the non-real-time RIC 161 using the A1 interface.

SMO manages multiple regional networks, and O-RAN NFs (O-CUs, Near-RT RIC 160, O-DUs) can be deployed in a regional data center which is connected to multiple cell sites or in cell site which is close to localized O-RU according to network requirements. Since SMO Functions and O-RAN NFs are micro services and deployment-independent logical functions, SMO Functions and O-RAN NFs can be composed of multiple deployment instances deployed in the same O-Cloud or in a different O-Cloud in regional data center, or in cell site according to network requirements (ex. capacity, latency, security, and so on) if the secure connection among SMO Functions and O-RAN NFs are available.

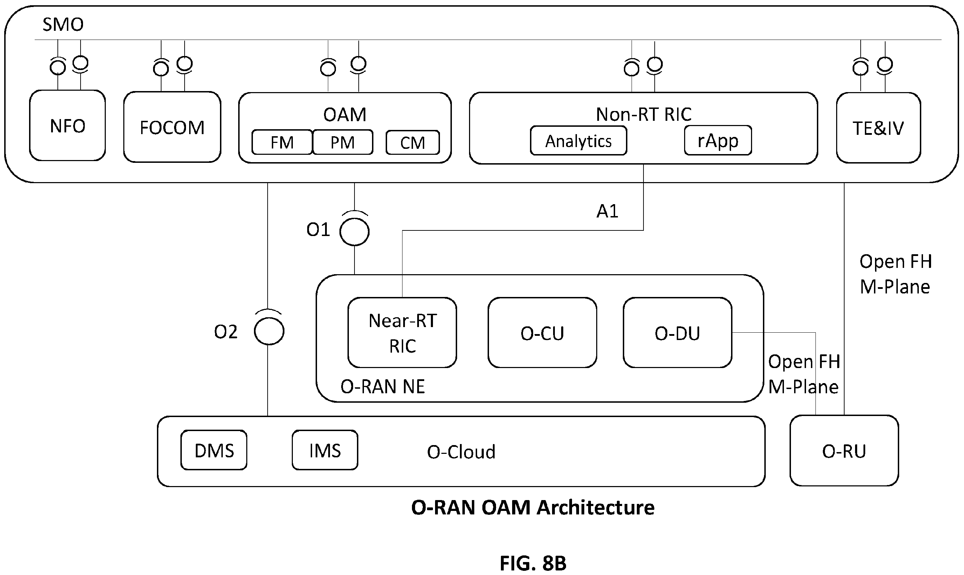

As shown in FIG. 8B, an O-RAN compliant SMO defines TE&IV, RAN NF OAM, Non-RT RIC, and NFO, FOCOM services. SMO interacts with O-RAN NFs with 01 interface. SMO interacts with O-RU with Open FH M-Plane interface and interacts O-Cloud via the O2 interface. O-RAN NF OAM manages O-RAN NF CM, FM, PM and creates O-RAN NF inventory and topology in TE&IV. FOCOM/NFO manages O-Cloud resources and creates O-Cloud resources inventory and topology in TE&IV. Analytics/rApp in Non-RT RIC can subscribe O-RAN NFs PM/FM, O-Cloud PM/FM data based on O-RAN NF OAM and FOCOM/NFO. Analytics/rApp in Non-RT RIC can retrieve the O-RAN NF and O-Cloud resource inventory and topology.

## PDU Sessions, DRBs, QoS Flows

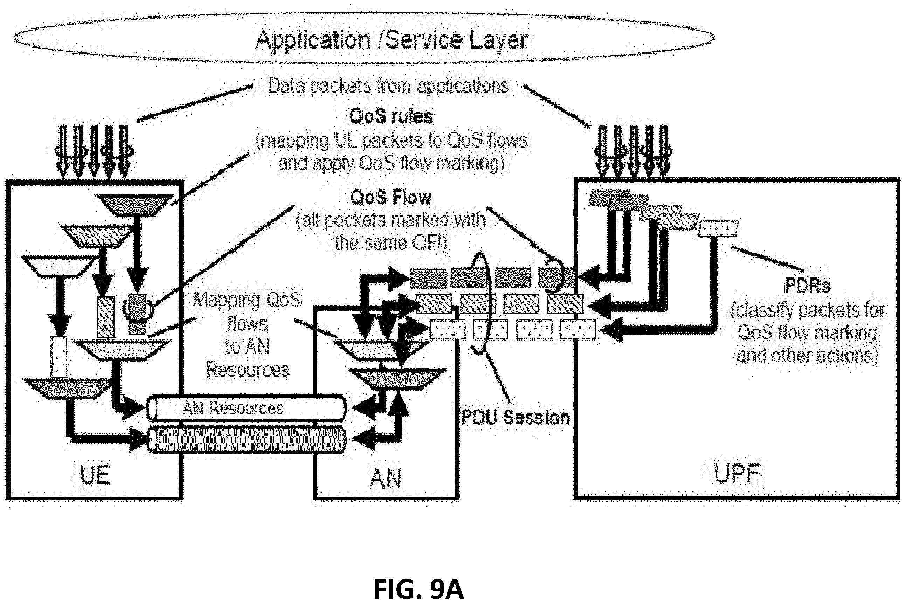

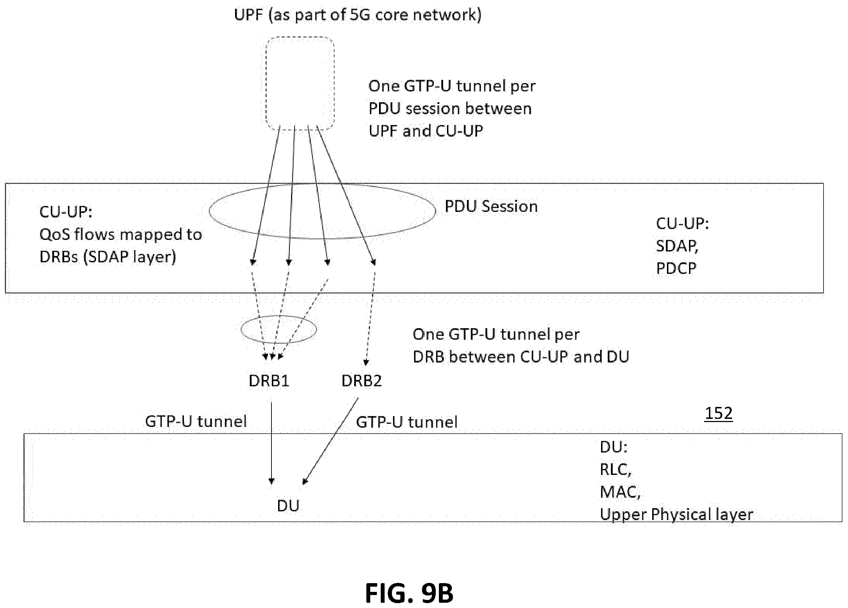

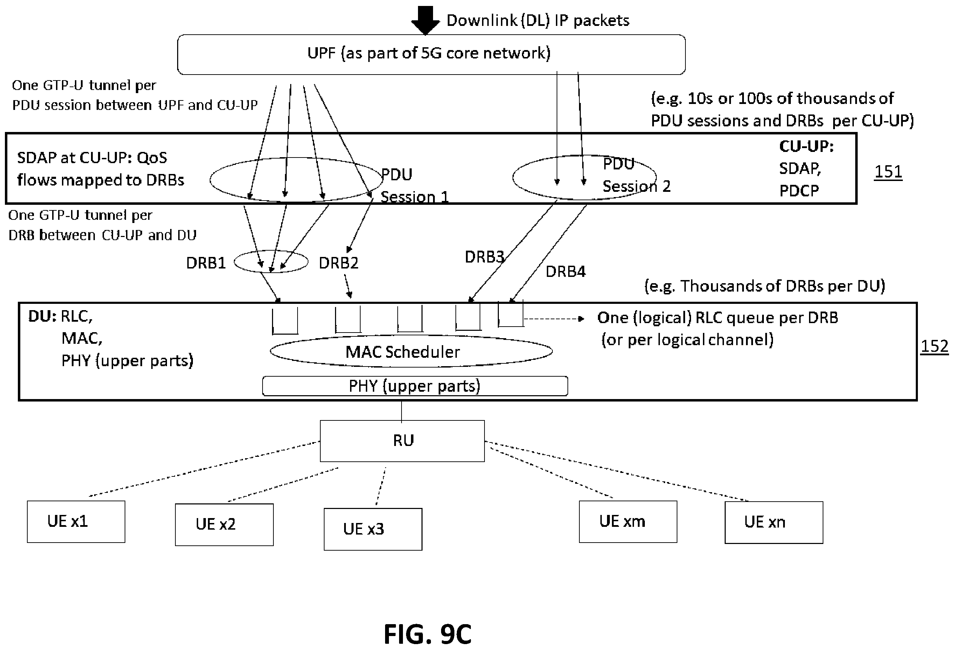

In 5G networks, PDU connectivity service is a service that provides exchange of PDUs between a UE and a data network identified by a Data Network Name (DNN). The PDU Connectivity service is supported via PDU sessions that are established upon request from the UE. This DNN defines the interface to a specific external data network. One or more QoS flows can be supported in a PDU session. All the packets belonging to a specific QoS flow have the same 5QI (5G QoS Identifier). FIG. 9A illustrates a PDU Session architecture consisting of multiple DRBs. Each DRB can consist of multiple QoS flows (3GPP TS 23.501). FIG. 9B illustrates a flow for PDU sessions, DRBs and GTP-U Tunnels across CU and DU. FIG. 9C illustrates a CU and DU view on PDU session, DRBs and GTP-U tunnels for a 5G network architecture. Parts of a standard 5QI from 3GPP TS 23.501 are shown in Table 1.

| 5QI Value | Resource Type | Default Priority Level | Packet Delay Budget (NOTE 3) | Packet Error Rate | Default Maximum Data Burst Volume (NOTE 2) | Default Averaging Window | Example Services |
|---|---|---|---|---|---|---|---|
| 1 | GBR (NOTE 1) | 20 | 100 ms (NOTE 11, NOTE 13) | $10^{-2}$ | N/A | 2000 ms | Conversational Voice |
| 2 | | 40 | 150 ms (NOTE 11, NOTE 13) | $10^{-3}$ | N/A | 2000 ms | Conversational Video (Live Streaming) |
| 3 | | 30 | 50 ms (NOTE 11, NOTE 13) | $10^{-3}$ | N/A | 2000 ms | Real Time Gaming, V2X messages (see TS 23.287 [121]), Electricity distribution – medium voltage, Process automation monitoring |
| 4 | | 50 | 300 ms (NOTE 11, NOTE 13) | $10^{-6}$ | N/A | 2000 ms | Non-Conversational Video (Buffered Streaming) |
| 65 (NOTE 9, NOTE 12) | | 7 | 75 ms (NOTE 7, NOTE 8) | $10^{-2}$ | N/A | 2000 ms | Mission Critical user plane Push To Talk voice (e.g., MCPTT) |
| 66 (NOTE 12) | | 20 | 100 ms (NOTE 10, NOTE 13) | $10^{-2}$ | N/A | 2000 ms | Non-Mission-Critical user plane Push To Talk voice |
| 67 (NOTE 12) | | 15 | 100 ms (NOTE 10, NOTE 13) | $10^{-3}$ | N/A | 2000 ms | Mission Critical Video user plane |
| 75 (NOTE 14) | | | | | | | |
| 71 | | 56 | 150 ms (NOTE 11, NOTE 13, NOTE 15) | $10^{-6}$ | N/A | 2000 ms | "Live" Uplink Streaming (e.g. TS 26.238 [76]) |
| 72 | | 56 | 300 ms (NOTE 11, NOTE 13, NOTE 15) | $10^{-4}$ | N/A | 2000 ms | "Live" Uplink Streaming (e.g. TS 26.238 [76]) |
| 73 | | 56 | 300 ms (NOTE 11, NOTE 13, NOTE 15) | $10^{-8}$ | N/A | 2000 ms | "Live" Uplink Streaming (e.g. TS 26.238 [76]) |
| 74 | | 56 | 500 ms (NOTE 11, NOTE 15) | $10^{-8}$ | N/A | 2000 ms | "Live" Uplink Streaming (e.g. TS 26.238 [76]) |
| 76 | | 56 | 500 ms (NOTE 11, NOTE 13, NOTE 15) | $10^{-4}$ | N/A | 2000 ms | "Live" Uplink Streaming (e.g. TS 26.238 [76]) |
| 5 | Non-GBR (NOTE 1) | 10 | 100 ms NOTE 10, NOTE 13) | $10^{-6}$ | N/A | N/A | IMS Signalling |
| 6 | | 60 | 300 ms (NOTE 10, NOTE 13) | $10^{-6}$ | N/A | N/A | Video (Buffered Streaming) TCP-based (e.g., www, e-mail, chat, ftp, p2p file sharing, progressive video, etc.) |
| 7 | | 70 | 100 ms (NOTE 10, NOTE 13) | $10^{-3}$ | N/A | N/A | Voice, Video (Live Streaming) Interactive Gaming |

*Table 1*

As shown in FIGS. 9A-9C, a PDU session comprises the following:
A Data Radio Bearer (DRB) is between UE and CU in RAN and a NG-U GTP tunnel which is between CU and UPF (User Plane Function) in the core network. For the 3GPP's 5G network architecture, the transport connection between the base station (i.e., CU-UP) and User Plane Function (UPF) uses a single GTP-U tunnel per PDU session. The PDU session is identified using GTP-U TEID (Tunnel Endpoint Identifier). The transport connection between DU and CU-UP uses a single GTP-U tunnel per DRB.

SDAP

The SDAP (Service Adaptation Protocol) Layer receives downlink data from the UPF across the NG-U interface. It maps one or more QoS Flow(s) onto a specific DRB. The SDAP header is present between the UE and the CU (when reflective QoS is enabled), and includes a field to identify the QoS flow in a specific PDU session. GTP-U protocol includes a field to identify the QoS flow and is present between CU and UPF (in the core network).

Procedures and functionality of the F1-U interface are defined in 3GPP TS 38.425. This F1-U interface supports NR User Plane (NR UP) protocol which provides support for flow control and reliability between CU-UP and DU for each DRB. A Resource Allocation (MAC Scheduler), DL Data, and Flow Control Feedback (DDDS) is employed in 5G Networks. Downlink User Data (DUD) PDU are used to carry PDCP PDUs from CU-UP to DU for each DRB. Downlink Data Delivery Status (DDDS) PDU from DU to CU-UP. The DDDS message conveys Desired Buffer Size (DBS), Desired Data Rate (DDR) and some other parameters from DU to CU-UP for each DRB as part of flow control feedback.

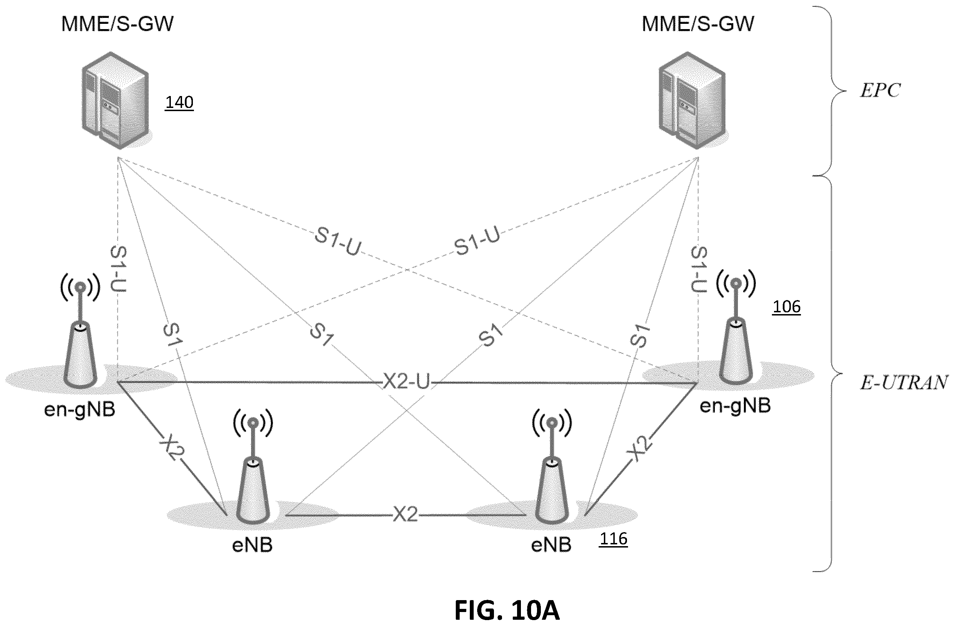

An E-UTRAN architecture is illustrated in FIG. 10A. The E-UTRAN comprises a number of eNBs 116 that provide the E-UTRA U-plane (PDCP/RLC/MAC/PHY) and control plane (RRC) protocol terminations towards the UE. The eNBs 116 are interconnected with each other by the X2 interface. The eNBs 116 are also connected by the S1 interface to the EPC (Evolved Packet Core) 140, more specifically to the MME (Mobility Management Entity) by the S1-MME interface and to the Serving Gateway (S-GW) by the S1-U interface. The S1 interface supports a many-to-many relation between MMEs / Serving Gateways and eNBs.

E-UTRAN also supports MR-DC via E-UTRA-NR Dual Connectivity (EN-DC), in which a UE is connected to an eNB that acts as a MN and an en-gNB 106 that acts as a SN. An EN-DC architecture is illustrated in FIG. 10A. The eNB 116 is connected to the EPC 140 via the S1 interface and to the en-gNB 106 via the X2 interface. The en-gNB 106 can also be connected to the EPC 140 via the S1-U interface and other en-gNBs 106 via the X2-U interface. In EN-DC, and en-gNB 106 comprises gNB-CU 151and gNB-DU(s) 152.

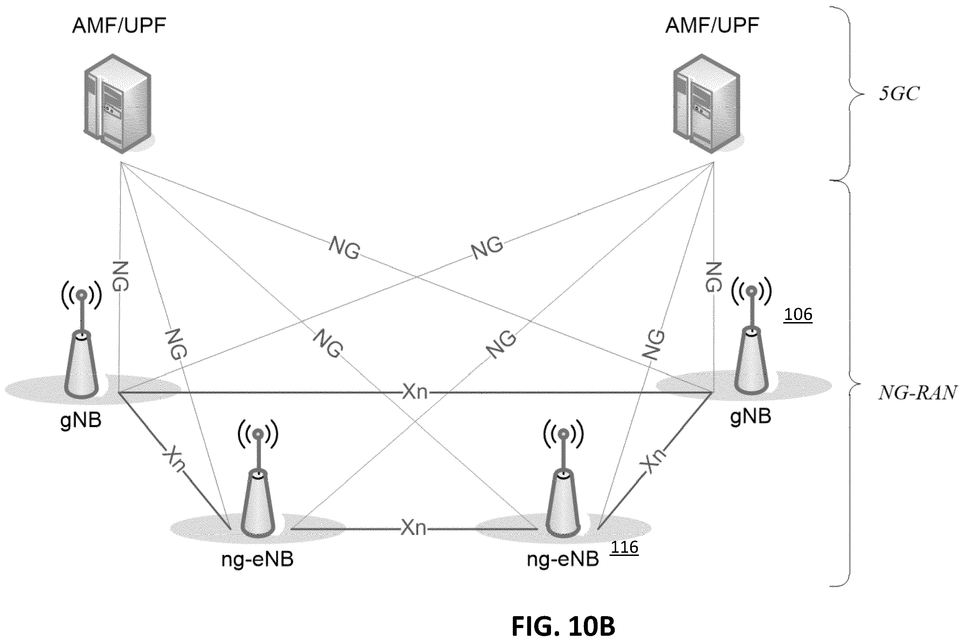

As shown in FIG. 10B, in the NG-RAN architecture, an NG-RAN node is either:

a gNB 106, providing NR user plane and control plane protocol terminations towards the UE; or

an ng-eNB 116, providing E-UTRA user plane and control plane protocol terminations towards the UE. (3GPP TS 38.300 17.3.0.)

As shown in FIG. 10B, the gNBs 106 and ng-eNBs 116 are interconnected with each other by the Xn interface. The gNBs 106 and ng-eNBs 116 are also connected by the NG interfaces to the 5GC, more specifically to the AMF (Access and Mobility Management Function) by the NG-C interface and to the UPF (User Plane Function) by means of the NG-U interface.

The gNB 106 and ng-eNB host functions such as functions for Radio Resource Management: Radio Bearer Control, Radio Admission Control, Connection Mobility Control, Dynamic allocation of resources to UEs in both uplink and downlink (scheduling), connection setup and release; session Management; QoS Flow management and mapping to data radio bearers; Dual Connectivity.

In an example, control information (e.g., scheduling information) can be provided for broadcast and/or multicast operation. The UE can monitor different bundle sizes for the control channel depending on the maximum number of repetitions.

As noted above, O-RAN is based on disaggregated components and connected through open and standardized interfaces is based on 3GPP LTE and NR RAN. In disaggregated architecture, gNB functionality is distributed into logical nodes CU-CP, CU-UP, DU and RU. DU and CU are connected through F1 interface. E1 interface connects CU-CP and CU-UP. The control plane interface F1-C is defined between CU-CP and DU and the user plane interface F1-U is defined between CU-UP and DU. Procedures and functionality of F1-U interface is defined in 3GPP TS 38.425. F1-U interface supports NR User Plane (NR UP) protocol which, among other things, provides support for flow control and reliability between CU-UP and DU. Communication over F1-U interface is achieved through exchange of three PDU types (or, messages): Downlink User Data (DUD) PDU from CU-UP to DU, Downlink Data Delivery Status (DDDS) PDU from DU to CU-UP, and Transfer of Assistance Information (TAI) PDU from DU to CU-UP.

In the figures below, the node hosting the NR PDCP is the CU-UP and the corresponding node is the DU.

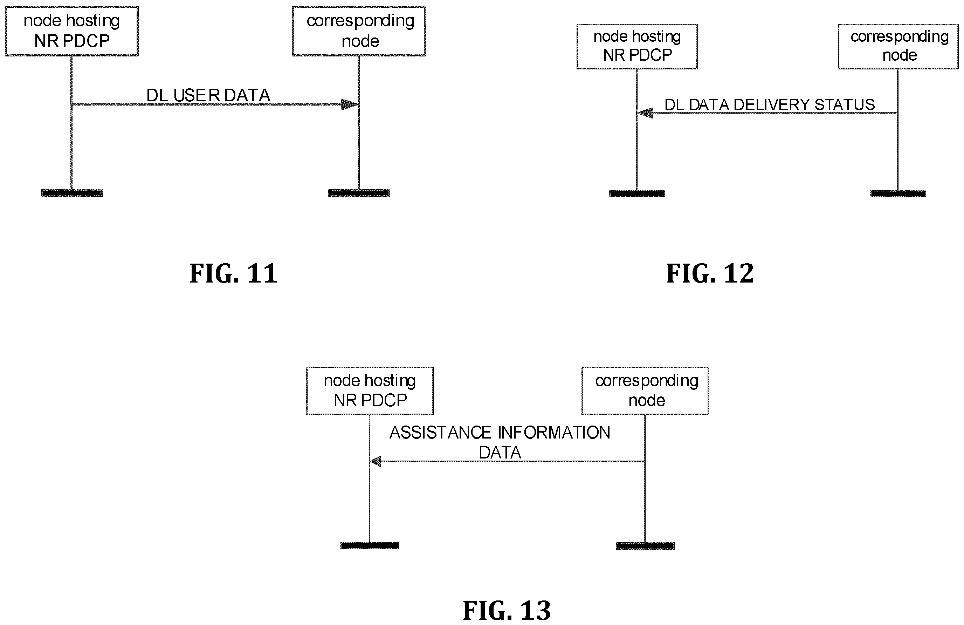

FIG. 11 shows DL User data (i.e. PDCP PDUs) from CU-UP to RLC SDU queues at the DU (corresponding node).

FIG. 12 shows DL Data Delivery Status (DDDS) - Flow Control Feedback from DU to CU-UP (for each DRB).

FIG. 13 shows Radio Assistance Information from DU (corresponding node) to CU-UP.

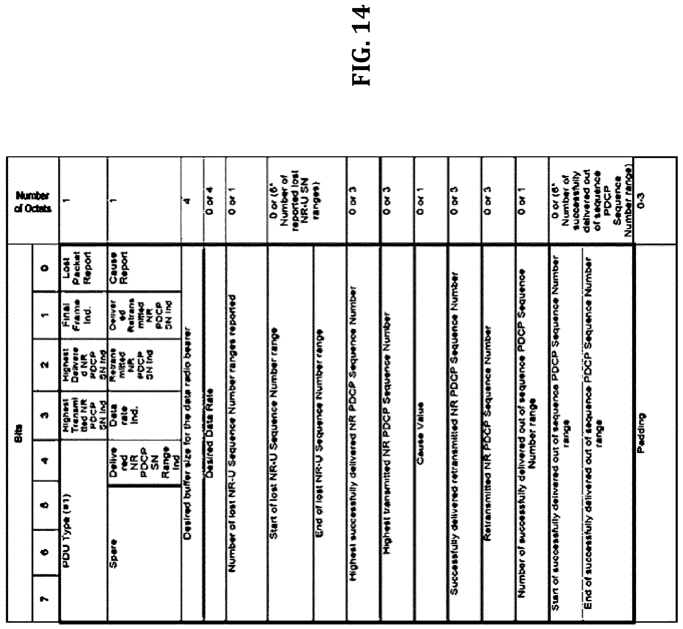

FIG. 14 shows DL Data Delivery Status (DDDS) from the corresponding node (DU) to the node hosting NR PDCP (i.e. CU-UP here) for each DRB.

The DDDS message, among other things, conveys Desired Buffer Size (DBS) in bytes and Desired Data Rate (DDR) in units of bytes/second to the CU-UP. It is up to implementation to come up with the mechanism to compute DBS and DDR and choose the frequency at which this information is conveyed by the DU (to the CU-UP)

If value of the DBS is zero for a DRB, the NR PDCP hosting node (i.e. the CU-UP here) shall stop sending data for that DRB from the CU-UP to the DU. If value of the DBS is greater than zero, the NR PDCP hosting node (i.e.: CU-UP) can send up to this amount of data for that DRB. The value of DDR is the amount of data desired to be received every second by the DU (from CU-UP) for that DRB.

Flow control on F1-U interface is critical in ensuring that DU is not overwhelmed beyond its capacity while receiving and processing PDUs from CU-UP. Following F1-U specification 3GPP TS 38.425, DU can be configured to send DDDS message carrying Desired Buffer Size (DBS) field frequently. While sending DBS frequently helps to maintain the throughput, it needs DU CPU processing power in running algorithms to compute DBS and forming the DDDS message. CPU gets stretched beyond its capacity when the DU begins to support a large number of DRBs. CU-UP also needs to process these messages frequently from DU and its processing requirements also increase as number of DRBs increase in the system. As a result, CPU becomes less available to serve other important tasks that affect the system performance. Thus, DU and CU need to implement techniques to maintain system scalability and at the same time, provide efficient CU-DU flow control, in the face of overload conditions.

Described are implementations to advantageously optimize CU-DU flow control. In 5G systems, PDCP layer (at CU-UP) performs reordering to provide in-sequence delivery while in 4G systems, reordering of RLC PDUs is done in RLC (for AM and UM mode) at DU to provide in-sequence delivery of PDCP PDUs. Due to this, flow control as used in 5G system is not really optimal for 4G systems. Disclosed is a method to optimize this for 4G systems.

For highly scalable systems, performance of CU and DU is limited by two resources: memory and CPU. It is also heavily dependent on the design of flow control mechanisms. To reduce processing overhead associated with buffer management in CU/DU, typical base station systems usually partition the available memory into a fixed number of pools each consisting of fixed number of fixed-sized buffers. A memory buffer is simply a collection of bytes. A buffer (e.g. for RLC SDU queues in DU) is typically not shared between two PDUs. While allocating memory, a PDU should ideally be assigned a buffer whose size is closer to the PDU length. When PDU length keeps changing for a given Logical Channel (LC) or the associated Data Radio Bearer (DRB), it may not always be possible to choose a buffer of exact matching size. This leads to memory wastage and reduces the number of LCs (or DRBs) that can be supported in this system. Further, the distribution of PDU length can change in time depending on the traffic type and this adds additional complexity for buffer management.

In static buffer management, a fixed memory configuration can be deployed and retained throughout the functioning of the network function. For example, available memory can be partitioned into a fixed number of memory pools with each pool consisting fixed number of buffers of a given size. This type of static arrangement can help to keep processing requirements of the NF quite low, but it can easily reduce the number of logical channels (or data radio bearers) that one can support with a given amount of memory. On the other end, this memory allocation can be made totally dynamic which helps to support higher number of LCs (or DRBs) but increases processing requirement in the NF. Also, it is difficult to estimate the number of buffer pools and size of each buffer in a given buffer pool and thus difficult to configure this for a given NF. Accordingly, described herein are implementations that improve CU-DU flow control and end-to-end performance.

As regards triggers and frequency of sending DDDS from DU to CU-UP, conventionally, for RLC AM, one can define more than one trigger to send DDDS message. Reception of status PDU from the peer RLC entity could be one trigger because it triggers removal of those RLC PDUs from the queue which are known to have been received at the UE. However, reception of status PDU may be delayed sometimes owing to bad UL radio channel conditions in which case DU can send DDDS message at regular intervals of time. Thus, DU can trigger DDDS message transmission when periodic timer expires or status PDU is received (from UE), whichever happens first. For RLC UM, owing to non-provision of reliability, status PDU mechanism does not apply, and hence only periodic timer expiry becomes the trigger. In a static configuration, periodic timer value will be held constant. As number of LCs (or DRBs) increase in the system, processing overhead at DU and CU also increases and that limits number of LCs / DRBs which can be supported with this system.

For buffer management at a NF (where NF could be DU or CU in this case) in O-RAN Systems, usually static methods have been used to keep processing overhead low as described in the previous section. Packet sizes used for each buffer pool are usually configured via a config management system. One can also use full-fledged dynamic memory management system for allocating buffer for incoming packets but that increases overhead of the system. It would be advantageous to have implementations as described herein to help improve CU-DU flow control performance.

Accordingly, described herein are, among others, implementations of methods and systems for flow control performance.

**Implementation I: optimizing frequency of flow control feedback from DU to CU-UP to improve scalability of a system**

In an implementation, there is a method for optimizing frequency of flow control feedback from DU to CU-UP to improve scalability of a system.

It is desirable that DU sends DDDS message as often as possible so that CU-UP can have the latest DBS information. DBS information indirectly reflects the radio channel condition as seen by the UE. With some of the existing systems, DU sends DDDS message when it receives RLC Status PDU from UE and/or periodically for RLC AM, and periodically for RLC UM. As number of DRBs increase in the system, the processing overhead due to DDDS message increases at DU as well as at CU.

Disclosed are the following implementations to control frequency of this flow control feedback to help improve scalability of the base station system:

*DDDS optimizations to help manage overload control:* In this implementation, a subset of DRBs is selected and a frequency of DDDS message transmission for these DRBs are reduced while the same frequency of sending / processing DDDS is maintained for other DRBs. The system is configured to continue to send DDDS messages at high frequency for latency-sensitive applications like VoNR, ViNR, and AR/VR while the frequency is reduced for other applications. This is done based on 5QIs associated with DRBs.

*DDDS adaptations to help manage overload control:* In another implementation, an operator configures a list of 5QIs (or even DRBs) for which a frequency of flow control feedback can be reduced as and when needed by the base station system to support higher number of DRBs. CPU load in DU and CU, the number of active DRBs, and a policy guideline from the operator are factored to provide timer values of different sets of DRBs.

*DDDS adaptation to help manage QoS for latency sensitive apps:* In an implementation, DU is configured to indicate to CU if a specific DRB is not getting latency or throughput as per its requirements. For latency, DU considers waiting time of RLC SDUs in the corresponding queues at DU, and if it exceeds beyond a threshold for certain number of packets, DU indicates this to CU-UP. For this purpose, the DDDS message is enhanced to indicate this condition to CU-UP. As of the present disclosure, there are three spare bits in the DDDS PDU of which one bit can be used to indicate RLC SDU waiting time performance at DU. Performance can be quantized into two states: low and high. The DU maintains and updates a state variable called "latencyCondition" (latencyCondition). Soon after the RB is created, DU sets the binary state variable latencyCondition to low. When DU finds that latency has exceeded a threshold, it will set the latencyCondition to high and set the corresponding bit in the DDDS PDU.

Frequency of DDDS is increased for some such DRBs and can be decreased for other DRBs if needed. As the waiting time of RLC SDUs reduces in the DU queues, DU Indicates this to CU-UP via the enhanced DDDS procedure and DU can use this to reduce frequency of DDDS for the corresponding DRB.

*DDDS optimizations for 4G systems:* In another implementation, the DU can be configured to send more frequent DDDS messages to CU-UP upon finding holes in the received PDCP SNs for 4G systems. In 4G, PDCP layer expects RLC to provide in-sequence delivery of PDCP PDUs at the peer PDCP layer. This requires 4G DU to provide in-sequence delivery of PDCP PDUs to the RLC layer. However, there can be losses on the link connecting 4G CU to 4G DU, in which case 4G DU should first recover lost PDCP PDUs before it puts them in-sequence and gives to RLC for transmission over the radio interface. Thus, a 4G DU can be configured to trigger transmission of DDDS message immediately upon finding holes in the received PDCP SNs or upon finding certain number of PDCP SN holes in the received PDCP SNs. This helps to reduce end-to-end delay (at application level) in 4G systems. It should be noted that this implementation is advantageous when in-sequence delivery is needed from the LTE RLC entity. While optimization given in specifically for 4G systems for this implementation, all the optimizations given above are applicable for 4G systems too.

## Implementation II: CU-DU Flow Control Optimizations for improved scalability

*II-A*: A total memory of M bytes (available for DRBs) are partitioned into $K$ pools where the $i$th pool consists of $M_i$ buffers of size $b_i$ bytes. The design parameters ($K, b_1, b_2, ..., b_K, M_1, M_2, ....., M_K$) can be configured via a configuration management system.

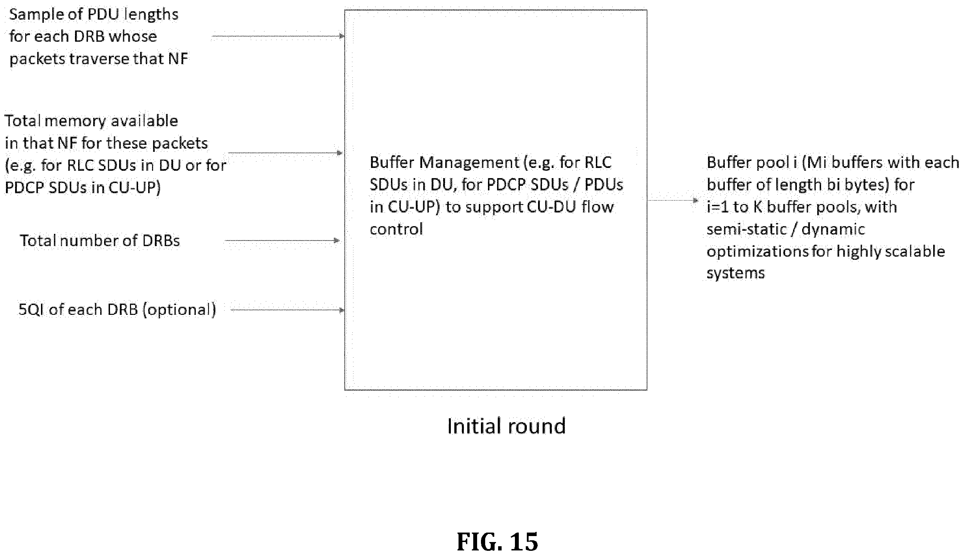

Here, good values of these at DU and CU-UP are computed as follows to help improve CU-DU flow control performance. A buffer management method is configured to improve scalability of base station system. To achieve this, a Buffer Management (BuffMgmt) module is configured for each NF. This BuffMgmt module can be located at DU or CU. This module takes in the vector of inputs: (a sample of PDU lengths for each DRB, total memory being made available for storing the PDUs of each DRB, 5QI of each DRB (i.e. 5QI of each application that is using these DRBs), total number of DRBs to be supported) and gives output as ($b_1, b_2, ..., b_K, M_1, M_2, ....., M_K$). Assuming a PDU of length $L$ is assigned a buffer of size b, memory wastage is defined as ($b - L$) bytes or memory utilization as $L/b$. The BuffMgmt module estimates the average memory wastage (or, utilization) considering all DRBs in the system. Wastage (or, utilization) is also computed for each buffer size separately. In an implementation, buffer management in a DU is described herein, however this can be implemented in the CU-UP as well. FIG. 15 shows an initial round for a per-network function buffer management.

A total memory of M bytes is partitioned into K pools, where the $i^{th}$ memory pool consists of $M_i$ buffers each of size $b_i$ bytes, subject to some constraints discussed earlier. A sample of T PDUs whose lengths are $X_1, X_2, ..., X_T$ at DU for a DRB is taken. Each of these T PDUs is assigned to a buffer whose size is closest to, and greater than or equal to the length of the PDU. Thus, each PDU will be assigned to a memory buffer whose size will be one of the $K$ different values. Here $K$ can be (much) smaller than $T$ for some applications. The empirical probabilities $p_i$ are calculated for each of the $K$ buffer sizes, where $1 <= i <= K$. The probability $p_i$ denotes the probability with which a buffer of size $b_i$ is picked up by a PDU arriving at DU. For example, a sample of 1000 PDUs received at DU at a time can be taken. Here, T=1000 PDUs. If K=90, it means that several of these T (i.e., 1000) PDUs are assigned to buffer of the same length, and length of each of these T PDUs maps to one of the $K$ buffer sizes.

Let $Y_i$ denote the $i^{th}$ maximum of the sample $X_1, X_2, ..., X_T$. That is, $Y_1$ is the PDU length that occurred the maximum number of times, $Y_2$ is the next PDU length after $Yi$ that occurred the maximum number of times, and so on. $Y_{(1)}, Y_{(2)}, ..., Y_{(K)}$ is the increasing-ordered sequence of $Y_1, Y_2, ..., Y_K$. The size of each buffer of type $i$ is estimated as $b_i = Y_{(i)} + \mu_i$ (Here, $\mu$ is a small factor in bytes and this can be configurable). A number of such buffers to be $M_i$ are estimated and set it equal to Ceil($p_i * M / b_i$)

*II-A-II*: In some cases, an operator can configure a maximum number of buffers for a DRB. For example, an operator can configure, RLC SDU queue of size, RlcSduQSize, for each DRB. To determine number of buffers of each buffer size that *RlcSduQSize* can comprise:

1. First calculate empirical probabilities $p_i$ for each of the $K$ buffer sizes, where $1 <= i <= K.$

2. Next, calculate the probability $q_i$ = sum($p_h$: PDU of length $h$ will be assigned a buffer of size $b_i$), considering PDU of length $h$ from the set of PDUs with PDU length K above

3. Ceil($q_i * RlcSduQSize$) buffers of size $b_i$ should be assigned for that DRB.

Note that the processing overhead (due to the semi-static buffer management) can somewhat go up, but can be reduced with the following:

- To do semi-static buffer management over somewhat longer time intervals (e.g. on the order of 1000s of ms or even 10s of seconds or minutes).
- Execute this during low load or low traffic scenario in the network.
- Use learnings from previous runs and that helps to reduce processing overhead.
- Provide an option to offload this processing to RIC if needed.

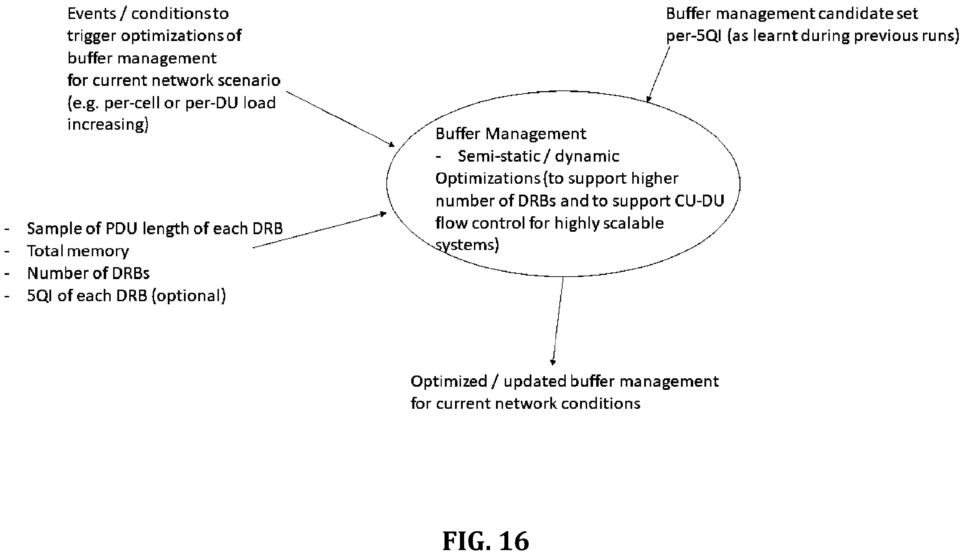

As this is done in semi-static buffer management, the system can be configured to support more users or support new types of applications more effectively. In most of the cases, semi-static buffer management will help to meet performance targets. In some cases, the implementation can be executed more dynamically, and the above mechanism will work for those cases too. FIG. 16 shows a semi-static (or dynamic) optimization method to support CU-DU flow control for highly scalable systems.

It will also be noted that implementation *II-A* is applicable for 5G as well as 4G systems.

*II-B:* Optimizations to help improve flow control and end-to-end performance.

*II-B-I:* If CU-UP receives DBS = 0 for a configurable consecutive number of times from DU (or, receives DBS=0 for *z1* out of last z2 DDDS messages) for a configurable number of DRBs and that there is at least a configurable number of PDUs in the corresponding PDCP SDU queues at CU-UP, CU-UP sends a message to DU to indicate this. For this, CU-UP can use one of the (reserved / unused) bits from existing DUD PDU structure for NR-UP / 3GPP TS 38.425 or a new field / message can be added. On receiving this message, the buffer management mechanism described above is run again to optimize the system.

For sending this message from CU-UP to DU: Downlink User Data (DUD) PDU of 3GPP TS 38.425 has 4 spare bits for future use (bit 3 of the first octet and bits 5, 6, and 7 of the second octet). One of these four bits can be utilized by CU-UP to trigger DU to run the buffer management compute implementation. Further, the DU can run buffer management on the reception of DUD PDU with the designated bit for buffer management set to 1.

*II-B-II* If the base station is configured to support higher number of DRBs compared to what it is able to support as of the present disclosure, buffer management can be run again to help optimize system performance. Also, if average memory wastage exceeds the pre-defined threshold *mem_wastage_thresh* and/or memory utilization, *mem_utilization_thresh,* goes below a pre-defined threshold, the above-described buffer management can be run again to optimize system performance. Alternatively, another event when average buffer wastage for last n buffer sizes exceed pre-defined thresholds can be used for those categories.

*II-B-III* In another method, DU learns a certain number of profiles (i.e., solutions) which are most likely to become the candidate memory management solutions. With this, the number of times needed to run buffer management mechanism specified here can be reduced, and this reduces processing overhead (and also delay in the system). Instead of running the complete mechanism again, another suitable candidate can be selected from the existing available profiles for that 5QI. It should be noted that implementation IIB is applicable for 5G as well as 4G systems.

*Implementation III: RIC assisted for CU-DU flow control optimizations.*

Here, controlling modules for implementations I and II are configured for and located at RIC.

The E2 nodes (CU and DU) are connected to the near-real-time RIC using the E2 interface. The E2 interface is used to send data (e.g., user, cell, slice KPMs) from the RAN, and deploy control actions and policies to the RAN. The application or service at the near-real-time RIC that deploys the control actions and policies to the RAN are call xApps. The near-real-time RIC is connected to the non-real-time RIC using the A1 interface. The E2 nodes, CU and DU are connected using the F1 interface. The DU is also connected to RU through the FH interface.

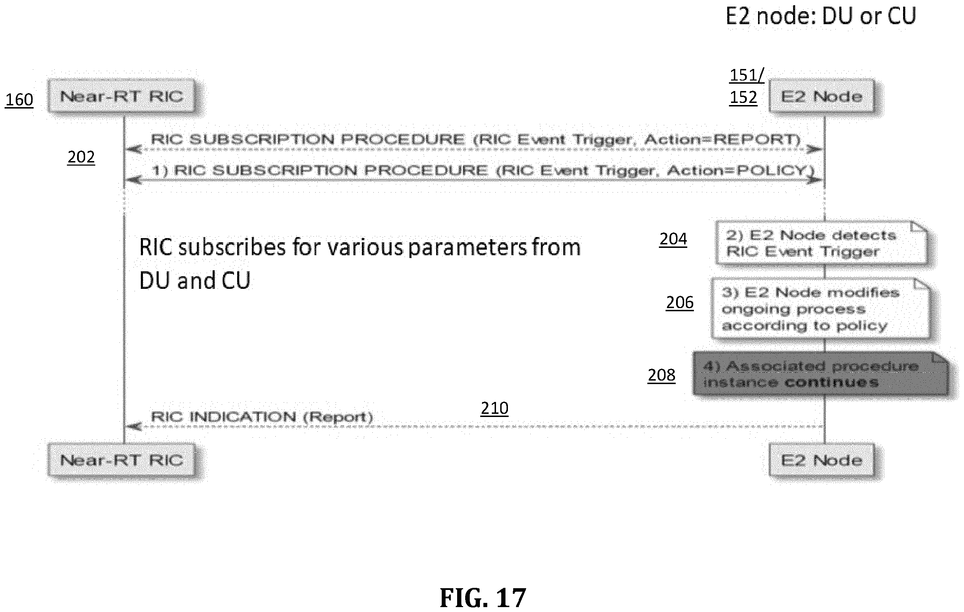

FIG. 17 illustrates a flow for near-Real-time RIC subscribing to select parameters from DU/CU and reporting of these parameters from DU/CU to near-RT-RIC. As shown in FIG. 17, at block 202, near-RT-RIC 160 subscribes for these parameters from E2 nodes (i.e. DU/CU), and DU/CU REPORTs these parameters to RIC. These parameters are communicated by adding suitable fields in E2 messages. At block 204 the E2 Node detects an RIC event trigger. At block 206, the E2 Node modifies the process as described herein. At block 208, the procedure instance at the E2 node continues. At block 210, the E2 Node reports the RIC indication to the near-RT RIC 160.

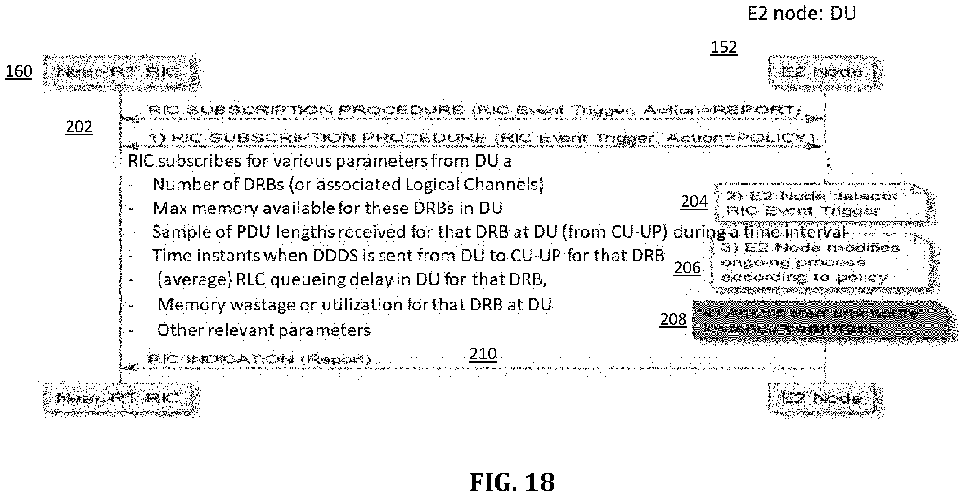

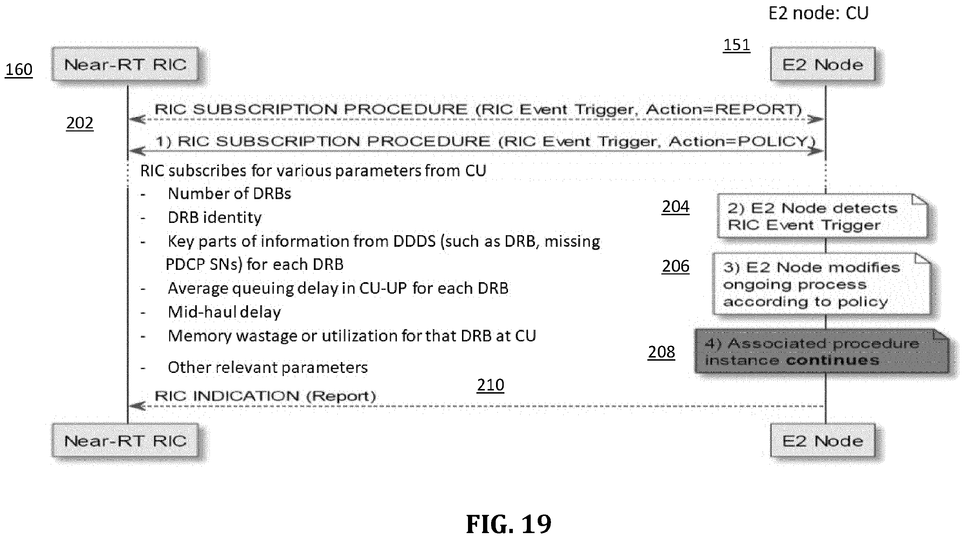

FIG. 18 illustrates a flow for near-RT-RIC subscribing to relevant parameters from the DU 152. FIG. 19 illustrates a flow for near-RT-RIC subscribing to various parameters from the CU 151. As shown in FIGS. 18-19, DU/CU communicates parameters such as the following to near-real-time RIC 160:

- Number of DRBs, total memory available for these DRBs;
- For each DRB (or for a select set of DRBs)

  ○ sample of PDU lengths received for that DRB at DU (from CU-UP) during a time interval
  ○ time instants when DDDS is sent from DU to CU-UP for that DRB
  ○ Key parts of information from DDDS (such as DRB, missing PDCP SNs) for that DRB
  ○ (average) RLC queueing delay in DU for that DRB,
  ○ Average queuing delay in CU-UP for that DRB
  ○ Mid-haul delay
  ○ Memory wastage or utilization for that DRB at DU
  ○ Memory wastage or utilization for that DRB at CU

and other input parameters as described in the previous implementation to RIC 160.

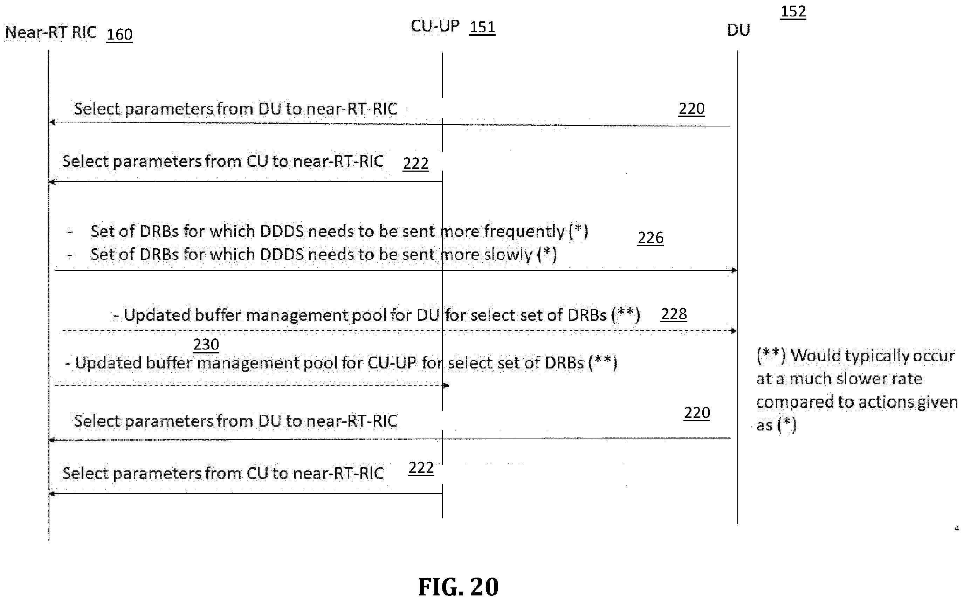

Implementations I and II above can run at RIC server and RIC communicates result of this step to target Network Function. RIC can also use learnings from previous implementation as shown in FIG. 16 while taking decisions related to frequency of flow control feedback and buffer management at RIC 160. Some output parameters communicated from RIC 160 to DU/CU by adding suitable fields in the E2 protocol for this purpose. FIG. 20 shows a flow for near-RT-RIC 160 to help manage frequency of flow control feedback and buffer management at DU/CU. As shown in FIG. 20, at block 220 select parameters are sent from the DU 152 and at block 222 are sent from the CU-UP 151 to near-RT RIC 160. The near-RT RIC 160 sends messages to the CU-UP 151 and DU 152, including:

- At block 226, the identities of DRBs for which DDDS needs to be sent more often (along with this shortened time interval),
- At block 226, identities of DRBs for which DDDS needs to be sent less often (along with this increased time interval),
- At block 228 updated buffer management pools for select set of DRBs (e.g. number and size of buffers of each type) to DU 152 and at block 230 to CU-UP 151. It will be noted that this is applies only for PDUs to be received in future for that DRB and not for existing packets of the DRBs.

Implementation III is applicable for a 5G architecture and system as well as 4G architecture and system.

It will be understood that implementations and embodiments can be implemented by computer program instructions. These program instructions can be provided to a processor to produce a machine, such that the instructions, which execute on the processor, create means for implementing the actions specified herein. The computer program instructions can be executed by a processor to cause a series of operational steps to be performed by the processor to produce a computer-implemented process such that the instructions, which execute on the processor to provide steps for implementing the actions specified. Moreover, some of the steps can also be performed across more than one processor, such as might arise in a multi-processor computer system or even a group of multiple computer systems. In addition, one or more blocks or combinations of blocks in the flowchart illustration can also be performed concurrently with other blocks or combinations of blocks, or even in a different sequence than illustrated without departing from the scope or spirit of the disclosure.

**Claims**

1. A method for a radio access network (RAN) base station (BS) comprising:

   selecting a subset of Data Radio Bearers (DRBs) from a set of DRBs;
   changing a frequency of DL Data Delivery Status (DDDS) message transmissions for the subset of DRBs; and
   maintaining a frequency or reducing the frequency of DDDS transmissions for remaining DRBs of the set of DRBs.

2. The method of claim 1, further comprising:

   reducing the frequency of the DDDS message transmissions for the subset of DRBs, and maintaining a frequency of the DDDS transmissions for remaining DRBs of the set of DRBs; or
   increasing the frequency of the DDDS message transmissions for the subset of DRBs, and maintaining a frequency or reducing the frequency of the DDDS transmissions for remaining DRBs of the set of DRBs.

3. The method of claim 1, wherein the method is implemented at a RAN Intelligent Controller (RIC) configured to identify the subset of DRBs based on parameters sent from a Distributed Unit (DU) (152) or a Centralized Unit (CU) (151) of the BS.

4. The method of claim 3, further comprising:

   subscribing to the parameters from a gNB (106) or eNB E2 node by a near-RT RIC (160)
   detecting, by the E2 node, an RIC event trigger;
   analyzing the parameters, by the near-RT RIC (160), to determine whether to change a frequency of the subset of DDDS transmissions, and if so;
   updating the parameters at the E2 node.

5. The method of claim 3, wherein the parameters comprise:

   a number of DRBs, total memory available for these DRBs; and
   for each of the DRBs or for the subset DRBs, the parameters comprise:

      a sample of PDU lengths received for that DRB at DU (152) during a time interval,
      time instants when DDDS is sent from DU to CU-UP (151) for that DRB,
      information from DDDS for that DRB,
      an average RLC queueing delay in DU (152) for that DRB,
      an average queuing delay in CU-UP for that DRB,
      a Mid-haul delay,
      a memory wastage or utilization for that DRB at DU (152), or
      a memory wastage or utilization for that DRB at CU (151), or
      any combination of thereof.

6. The method of claim 5, wherein the parameters comprise:
   sending output parameters from the RT RIC (160) to the CU (151), the DU (152), or both, including:

   an identity of DRBs for which DDDS needs to be sent more often and a decreased time interval;
   an identity of DRBs for which DDDS needs to be sent less often and an increased time interval; or
   updated buffer management pools for the subset of DRBs;
   or a combination of thereof.

7. A method for a radio access network (RAN) base station (BS) comprising a Distributed Unit (DU) (152) and a Centralized unit (CU) (151):

indicating at DU (152) if a DRB is not getting a required latency or throughput;
determining, at the DU (152), if a waiting time of Radio Link Control (RLC) Service Data Units (SDUs) in queues at the DU (152) exceeds a threshold criterion for a number of packets; and
if so, indicating by the DU (152) to the CU (151) that the threshold criterion is exceeded, and reducing a frequency of DDDS message transmissions for the DRB if the threshold criterion is exceeded.

8. The method of claim 7, further comprising:
maintaining, by the DU (152), a latency condition state variable configured to indicate a high or low latency state, wherein the DU (152) is preferably configured to set a DDDS Protocol Data Unit (PDU) bit to indicate the latency condition when the latency is in the high condition.

9. A method for a radio access network (RAN) base station (BS) comprising a Distributed Unit (DU) and a Centralized unit (CU) comprising:
configuring a 4G eNB DU to increase a frequency of DDDS messages to a CU upon finding holes in a received Packet Data Convergence Protocol (PDCP) SNs.

10. A system comprising:
a base station (BS) comprising a buffer management module, the buffer management module being configured to take a vector of inputs and output buffer management parameters to compute a wastage for a buffer size for each DRB and an average memory wastage across a plurality of DRBs.

11. The system of claim 10, wherein the buffer management module is further configured to at least

give the output as $(b_1, b_2, ..., b_K, M_1, M_2, ....., M_K)$; and
vector of inputs includes:

a sample of PDU lengths for each DRB,
total memory being made available for storing the PDUs of each DRB,
5QI of each DRB, or
total number of DRBs to be supported; or
or any combination thereof.

12. The system of claim 10, wherein for a PDU of length $L$ assigned to a buffer of size $b$,

memory wastage is defined as $(b - L)$ bytes, or memory utilization is defined as $L/b$;
and the buffer management module is configured to at least estimate the average memory wastage considering all of the plurality of DRBs; and

the buffer management module is preferably configured to at least estimate the average memory wastage for each buffer size separately.

13. The system of claim 10, wherein the buffer management module is preferable configured with a maximum number of buffers for a DRB and is configured to at least:

partition a total memory of $M$ bytes is partitioned into $K$ pools, where the $i^{th}$ memory pool consists of $M_i$ buffers each of size $b_i$ bytes;
take a sample of $T$ PDU lengths $X_1, X_2, ..., X_T$ at DU for a DRB, where each of the $T$ PDUs are to be assigned to a buffer having a size one of the $K$ different values; wherein $K$ is smaller than $T$ for one or more applications; and
calculate empirical probabilities $p_i$ for each of the $K$ buffer sizes, where $1 <= i <= K$, so that where a plurality of the PDUs get assigned to a buffer of the same size;

where $Yi$ denotes an $i^{th}$ maximum of the sample $X_1, X_2, ..., X_T$, so that $Y_1$ is the PDU length that occurred the maximum number of times, $Y_2$ is the next PDU length after $Yi$ that occurred the maximum number of times, and so on to Yn, and $Y_{(1)}, Y_{(2)}, ..., Y_{(K)}$ is the increasing-ordered sequence of $Y_1, Y_2, ..., Y_K$, the size of each buffer of type $i$ is estimated as $b_i = Y_{(i)} + \mu_i$, $\mu$ being configurable a small factor in bytes, and a number of the buffers to be $M_i$ are estimated and set it equal to Ceil($p_i * M / b_i$).

**14.** The system of claim 13, wherein the buffer management module is configured with a RLC SDU queue of size (RlcSduQSize) for each DRB, and calculating the maximum number of buffers for each buffer size the *RlcSduQSize* comprises:

first calculating empirical probabilities $p_i$ for each of the K PDU lengths, where

$$1 <= i <= K.;$$

calculating the probability $q_i$ ;
summing the PDU of length $h$ to be assigned a buffer of size $b_i \, p_h$, taking PDU of length h from the set of PDUs with PDU length K; and
assigning Ceil($q_i * RlcSduQSize$) buffers of size $b_i$ should for the DRB.

**15.** The system of claim 10, wherein the buffer management module is implemented a Distributed Unit (DU) (152) or a Centralized unit (CU) (151); or
the buffer management module is connected to an RIC, and the RIC is configured
to implement actions for the buffer management module.

**100**

NR UE (101) — Circuitry (102)

Uu Interface (120)

NR gNB (106) — Circuitry (107)

Programmable Circuit (102A): Processor (103), Memory (104), Module (105)

Programmable Circuit (107A): Processor (108), Memory (109), Module (110)

Storage Device (130)

**FIG. 1**

FIG. 2

FIG. 3

AMF
- NAS

gNB 106
- RRC
- PDCP
- RLC
- MAC
- PHY

UE 101
- NAS
- RRC
- PDCP
- RLC
- MAC
- PHY

EP 4 472 344 A2

**FIG. 4A**

FIG. 4B

FIG. 5

**FIG. 6**

**FIG. 7**

**FIG. 8A**

EP 4 472 344 A2

**O-RAN OAM Architecture**

**FIG. 8B**

**FIG. 9A**

UPF (as part of 5G core network)

One GTP-U tunnel per
PDU session between
UPF and CU-UP

CU-UP:
QoS flows mapped to
DRBs (SDAP layer)

PDU Session

CU-UP:
SDAP,
PDCP

One GTP-U tunnel per
DRB between CU-UP and DU

DRB1    DRB2

GTP-U tunnel    GTP-U tunnel    152

DU:
RLC,
MAC,
Upper Physical layer

DU

## FIG. 9B

**FIG. 9C**

**FIG. 10A**

EP 4 472 344 A2

AMF/UPF

AMF/UPF

*5GC*

NG

NG

NG

NG

NG

NG

NG

NG

106

gNB

gNB

*NG-RAN*

Xn

((•))

((•))

Xn

Xn

ng-eNB

Xn

ng-eNB

116

**FIG. 10B**

node hosting NR PDCP — DL DATA DELIVERY STATUS → corresponding node

**FIG. 12**

node hosting NR PDCP → ASSISTANCE INFORMATION DATA → corresponding node

**FIG. 13**

node hosting NR PDCP — DL USER DATA → corresponding node

**FIG. 11**

| Bits | | | | | | | | Number of Octets |
|---|---|---|---|---|---|---|---|---|
| 7 | 6 | 5 | 4 | 3 | 2 | 1 | 0 | |
| PDU Type (#1) | | | | Highest Transmi tted NR PDCP SN Ind | Highest Delivere d NR PDCP SN Ind | Final Frame Ind. | Lost Packet Report | 1 |
| Spare | | | Delive red NR PDCP SN Range Ind | Data rate Ind. | Retrans mitted NR PDCP SN Ind | Deliver ed Retrans mitted NR PDCP SN Ind | Cause Report | 1 |
| Desired buffer size for the data radio bearer | | | | | | | | 4 |
| Desired Data Rate | | | | | | | | 0 or 4 |
| Number of lost NR-U Sequence Number ranges reported | | | | | | | | 0 or 1 |
| Start of lost NR-U Sequence Number range | | | | | | | | 0 or (6* Number of reported lost NR-U SN ranges) |
| End of lost NR-U Sequence Number range | | | | | | | | |
| Highest successfully delivered NR PDCP Sequence Number | | | | | | | | 0 or 3 |
| Highest transmitted NR PDCP Sequence Number | | | | | | | | 0 or 3 |
| Cause Value | | | | | | | | 0 or 1 |
| Successfully delivered retransmitted NR PDCP Sequence Number | | | | | | | | 0 or 3 |
| Retransmitted NR PDCP Sequence Number | | | | | | | | 0 or 3 |
| Number of successfully delivered out of sequence PDCP Sequence Number range | | | | | | | | 0 or 1 |
| Start of successfully delivered out of sequence PDCP Sequence Number range | | | | | | | | 0 or (6* Number of successfully delivered out of sequence PDCP Sequence Number range) |
| End of successfully delivered out of sequence PDCP Sequence Number range | | | | | | | | |
| Padding | | | | | | | | 0-3 |

**FIG. 14**

Sample of PDU lengths
for each DRB whose
packets traverse that NF

Total memory available
in that NF for these packets
(e.g. for RLC SDUs in DU or for
PDCP SDUs in CU-UP)

Total number of DRBs

5QI of each DRB (optional)

Buffer Management (e.g. for RLC SDUs in DU, for PDCP SDUs / PDUs in CU-UP) to support CU-DU flow control

Buffer pool i (Mi buffers with each buffer of length bi bytes) for i=1 to K buffer pools, with semi-static / dynamic optimizations for highly scalable systems

Initial round

**FIG. 15**

Events / conditions to
trigger optimizations of
buffer management
for current network scenario
(e.g. per-cell or per-DU load
increasing)

Buffer management candidate set
per-5QI (as learnt during previous runs)

Buffer Management
- Semi-static / dynamic
Optimizations (to support higher
number of DRBs and to support CU-DU
flow control for highly scalable
systems)

- Sample of PDU length of each DRB
- Total memory
- Number of DRBs
- 5QI of each DRB (optional)

Optimized / updated buffer management
for current network conditions

## FIG. 16

EP 4 472 344 A2

E2 node: DU or CU

**160** Near-RT RIC

**151/**
**152** E2 Node

**202** RIC SUBSCRIPTION PROCEDURE (RIC Event Trigger, Action=REPORT)

1) RIC SUBSCRIPTION PROCEDURE (RIC Event Trigger, Action=POLICY)

RIC subscribes for various parameters from DU and CU

**204** 2) E2 Node detects RIC Event Trigger

**206** 3) E2 Node modifies ongoing process according to policy

**208** 4) Associated procedure instance **continues**

**210** RIC INDICATION (Report)

Near-RT RIC

E2 Node

EP 4 472 344 A2

**FIG. 17**

EP 4 472 344 A2

E2 node: DU

<u>152</u>

<u>160</u> Near-RT RIC | E2 Node

<u>202</u> RIC SUBSCRIPTION PROCEDURE (RIC Event Trigger, Action=REPORT)

1) RIC SUBSCRIPTION PROCEDURE (RIC Event Trigger, Action=POLICY)

RIC subscribes for various parameters from DU a
- Number of DRBs (or associated Logical Channels)
- Max memory available for these DRBs in DU
- Sample of PDU lengths received for that DRB at DU (from CU-UP) during a time interval
- Time instants when DDDS is sent from DU to CU-UP for that DRB
- (average) RLC queueing delay in DU for that DRB,
- Memory wastage or utilization for that DRB at DU
- Other relevant parameters

<u>204</u> 2) E2 Node detects RIC Event Trigger

<u>206</u> 3) E2 Node modifies ongoing process according to policy

<u>208</u> 4) Associated procedure instance **continues**

<u>210</u> RIC INDICATION (Report)

Near-RT RIC | E2 Node

**FIG. 18**

E2 node: CU

Near-RT RIC 160 · E2 Node 151

202
1) RIC SUBSCRIPTION PROCEDURE (RIC Event Trigger, Action=REPORT)
RIC SUBSCRIPTION PROCEDURE (RIC Event Trigger, Action=POLICY)

RIC subscribes for various parameters from CU
- Number of DRBs
- DRB identity
- Key parts of information from DDDS (such as DRB, missing PDCP SNs) for each DRB
- Average queuing delay in CU-UP for each DRB
- Mid-haul delay
- Memory wastage or utilization for that DRB at CU
- Other relevant parameters

2) E2 Node detects RIC Event Trigger  204

3) E2 Node modifies ongoing process according to policy  206

4) Associated procedure instance **continues**  208

210  RIC INDICATION (Report)

Near-RT RIC · E2 Node

**FIG. 19**

EP 4 472 344 A2

Near-RT RIC 160

CU-UP 151

DU 152

Select parameters from DU to near-RT-RIC 220

Select parameters from CU to near-RT-RIC 222

- Set of DRBs for which DDDS needs to be sent more frequently (*)
- Set of DRBs for which DDDS needs to be sent more slowly (*) 226

- Updated buffer management pool for DU for select set of DRBs (**) 228

230
- Updated buffer management pool for CU-UP for select set of DRBs (**)

Select parameters from DU to near-RT-RIC 220

Select parameters from CU to near-RT-RIC 222

(**) Would typically occur at a much slower rate compared to actions given as (*)

**FIG. 20**

**REFERENCES CITED IN THE DESCRIPTION**

**Non-patent literature cited in the description**

- *3GPP TS 23.203 V 17.2.0,* 23 December 2021
- *3GPP TS 23.501 V 18.1.0,* 05 April 2023
- *3GPP TS 38.300 V 17.4.0,* 28 March 2023
- *3GPP TS 36.321 V 17.4.0,* 29 March 2023
- *3GPP TS 36.323 V 17.2.0,* 13 January 2023
- *3GPP TS 38.321 V 17.4.0,* 29 March 2023
- *3GPP TS 38.401 V 17.4.0,* 03 April 2023
- *3GPP TS 38.501 V 18.1.0,* 05 April 2023
- *3GPP TS 38.425 17.3.0,* 03 April 2023